(19) Europäisches Patentamt
European Patent Office
Office européen des brevets

(11) EP 4 664 592 A1

(12) EUROPEAN PATENT APPLICATION
published in accordance with Art. 153(4) EPC

(43) Date of publication:
17.12.2025 Bulletin 2025/51

(21) Application number: 24854439.7

(22) Date of filing: 12.08.2024

(51) International Patent Classification (IPC):
*H01M 10/0567* (2010.01) *H01M 10/0568* (2010.01)
*H01M 10/0569* (2010.01) *H01M 10/052* (2010.01)

(52) Cooperative Patent Classification (CPC):
**H01M 10/052; H01M 10/0567; H01M 10/0568; H01M 10/0569;** Y02E 60/10

(86) International application number:
PCT/KR2024/011990

(87) International publication number:
WO 2025/037888 (20.02.2025 Gazette 2025/08)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 17.08.2023 KR 20230107822
09.08.2024 KR 20240107158

(71) Applicant: LG Energy Solution, Ltd.
Seoul 07335 (KR)

(72) Inventors:
- JI, Su Hyeon
Daejeon 34122 (KR)
- LEE, Jung Min
Daejeon 34122 (KR)
- YEOM, Chul Eun
Daejeon 34122 (KR)
- LEE, Chul Haeng
Daejeon 34122 (KR)

(74) Representative: Hoffmann Eitle
Patent- und Rechtsanwälte PartmbB
Arabellastraße 30
81925 München (DE)

# (54) NON-AQUEOUS ELECTROLYTE AND LITHIUM SECONDARY BATTERY COMPRISING SAME

(57) The present disclosure relates to a non-aqueous electrolyte including a lithium salt, an organic solvent, and an additive, wherein the additive includes a compound represented by the following Formula 1:

[Formula 1]

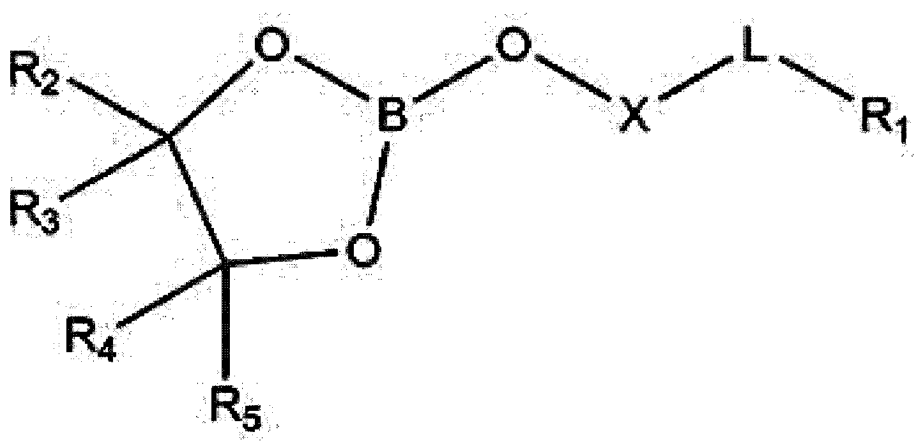

In Formula 1 above, $R_1$ is an allyl group or a propargyl group; $R_2$, $R_3$, $R_4$ and $R_5$ are each independently selected from hydrogen and an alkyl group having 1 to 5 carbon atoms; L is selected from a single bond and an alkylene group having 1 to

10 carbon atoms; and X is selected from -C(=O)-, -S(=O)- and -S(=O)$_2$-.

## Description

## [TECHNICAL FIELD]

The present disclosure relates to a non-aqueous electrolyte and a lithium secondary battery including the same.

## [BACKGROUND ART]

There is a need to develop technology for efficiently storing and utilizing electrical energy as personal IT devices and computer networks are developed with the recent development of information society and the accompanying dependency of society as a whole on the electrical energy is increased.

A secondary battery is a technology that is most suitable for various applications among developed technologies, and among the secondary batteries, a lithium secondary battery, which may be miniaturized to be applicable to a personal IT device and has the highest energy density, is in the spotlight.

Generally, lithium secondary batteries are prepared by injecting or impregnating a non-aqueous electrolyte into an electrode assembly comprising a positive electrode, a negative electrode, and a porous separator.

The uses of lithium-containing cobalt oxides, $LiMnO_2$ having a layered crystal structure, $LiMn_2O_4$ having a spinel crystal structure, lithium-containing nickel oxides ($LiNiO_2$), and lithium nickel-cobalt-manganese transition metal oxides are under consideration as the positive electrode active material of such a lithium secondary battery. Meanwhile, the uses of carbon-based active materials, silicon-based active materials, and the like are being under consideration as the negative electrode active material.

In particular, the significance of high capacity, high output, and long life characteristics is growing in lithium secondary batteries used for vehicles. In order to achieve the high capacity of lithium secondary batteries, it may be considered to use a high-Ni content positive electrode active material having high energy density but low stability, or to drive the lithium secondary battery at a high voltage.

However, when the lithium secondary battery is driven under the above conditions, as charging and discharging proceeds, the surface structure of an electrode or a film formed on the surface of positive/negative electrode deteriorates due to a side reaction caused by the deterioration of an electrolyte, and thus transition metal ions may be eluted from the surface of the positive electrode. As described above, since the eluted transition metal ions are electro-deposited on the negative electrode and reduce passivation ability of a solid electrolyte interphase (SEI) of the negative electrode, there occurs a problem in that the negative electrode deteriorates. This deterioration phenomenon of the secondary battery tends to be further accelerated when the potential of the positive electrode is increased or when the battery is exposed to high temperatures.

In addition, when the lithium secondary battery is continuously used for a long period of time or left to stand at high temperatures, gas is generated, thereby causing a so-called swelling phenomenon in which the thickness of the battery increases, and it is known that the amount of gas generated in this case depends on the state of the SEI.

Therefore, in order to solve such problems, research and development on methods capable of suppressing the elution of metal ions from the positive electrode and forming a stable SEI film on the negative electrode, thereby reducing the swelling phenomenon of the lithium secondary battery and increasing the stability at high temperatures have been attempted.

## [DISCLOSURE OF THE INVENTION]

## [TECHNICAL PROBLEM]

An aspect of the present disclosure provides a non-aqueous electrolyte capable of forming a durable film on the negative electrode.

In addition, another aspect of the present disclosure provides a lithium secondary battery including the above-described non-aqueous electrolyte and having improved high-temperature cycle characteristics and high-temperature storage performance, thereby improving overall performance.

## [TECHNICAL SOLUTION]

[1] The present disclosure provides a non-aqueous electrolyte including a lithium salt, an organic solvent, and an additive, wherein the additive includes a compound represented by the following Formula 1.

[Formula 1]

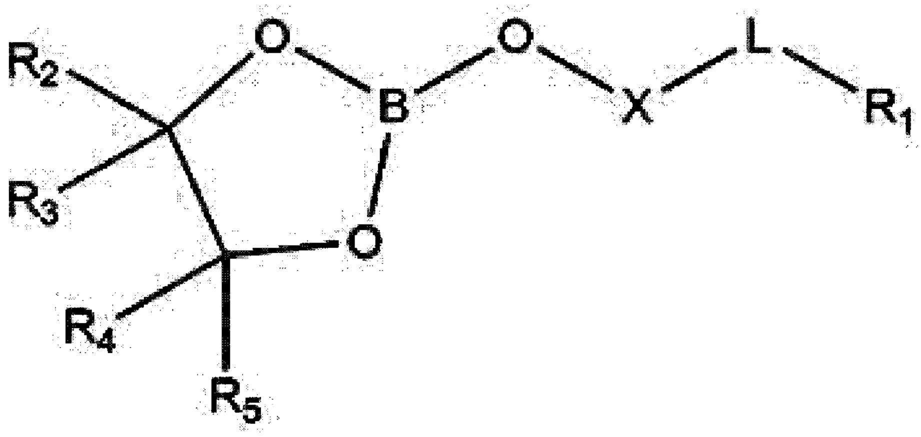

In Formula 1 above, $R_1$ is an allyl group or a propargyl group; $R_2$, $R_3$, $R_4$ and $R_5$ are each independently selected from hydrogen and an alkyl group having 1 to 5 carbon atoms; L is selected from a single bond and an alkylene group having 1 to 10 carbon atoms; and X is selected from -C(=O)-, -S(=O)- and $-S(=O)_2-$

[2] The present disclosure provides a non-aqueous electrolyte, wherein in the above [1], the above $R_1$ is an allyl group.

[3] The present disclosure provides a non-aqueous electrolyte, wherein in the above [1] or [2], X is selected from -C(=O)- and -S(=O)-.

[4] The present disclosure provides a non-aqueous electrolyte, wherein in at least one of the above [1] to [3], the above $R_2$, $R_3$, $R_4$ and $R_5$ are each independently an alkyl group having 1 to 5 carbon atoms.

[5] The present disclosure provides a non-aqueous electrolyte, wherein in at least one of the above [1] to [4], the compound represented by Formula 1 above includes at least one selected from the group consisting of compounds represented by Formula 1-A, Formula 1-B, Formula 1-C, Formula 2-A, Formula 2-B and Formula 2-C below.

[Formula 1-A]

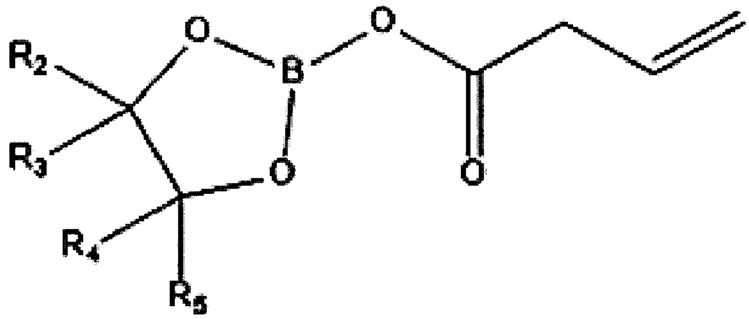

[Formula 1-B]

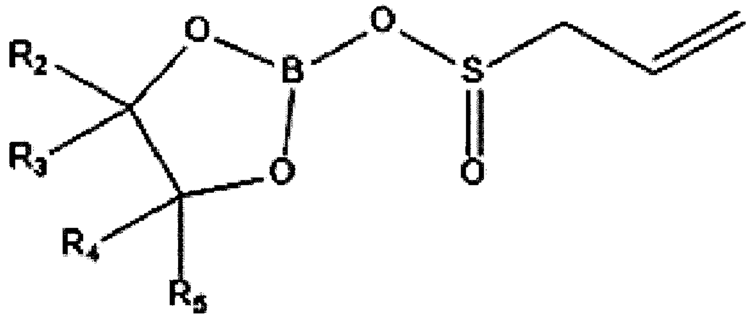

[Formula 1-C]

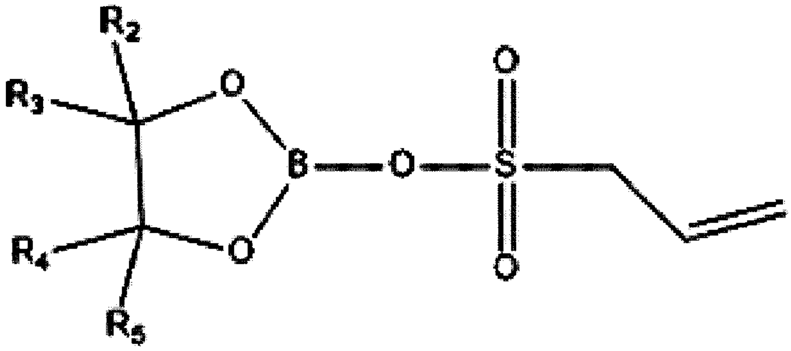

[Formula 2-A]

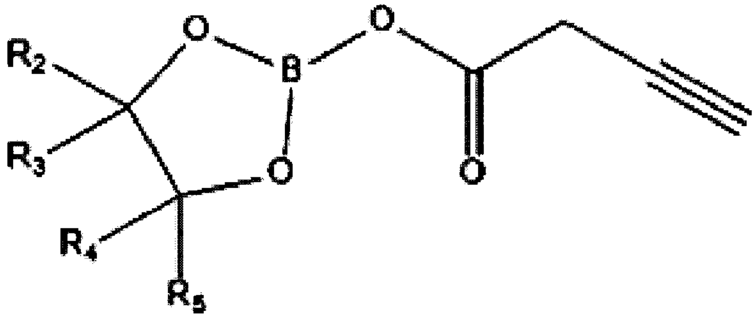

[Formula 2-B]

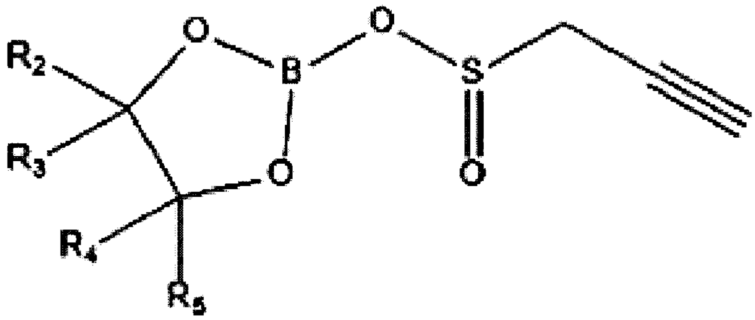

[Formula 2-C]

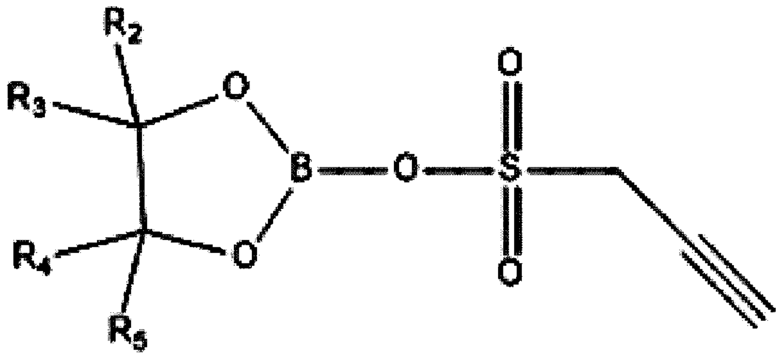

In the above Formula 1-A, Formula 1-B, Formula 1-C, Formula 2-A, Formula 2-B and Formula 2-C, $R_2$, $R_3$, $R_4$ and $R_5$ are as defined in Formula 1 above.

[6] The present disclosure provides a non-aqueous electrolyte, wherein in at least one of the above [1] to [5], the

compound represented by Formula 1 above includes at least one selected from the group consisting of compounds represented by Formula 1-A-1, Formula 1-A-2, Formula 1-B-1, Formula 1-B-2, Formula 1-C-1, Formula 1-C-2, Formula 2-A-1,Formula 2-A-2, Formula 2-B-1, Formula 2-B-2, Formula 2-C-1 and Formula 2-C-2 below.

[Formula 1-A-1]

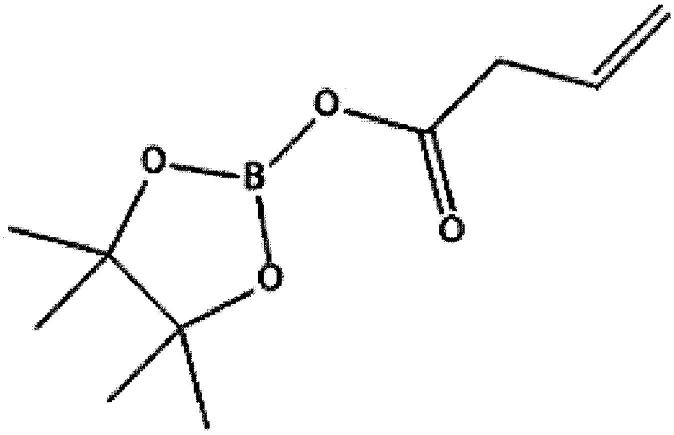

[Formula 1-A-2]

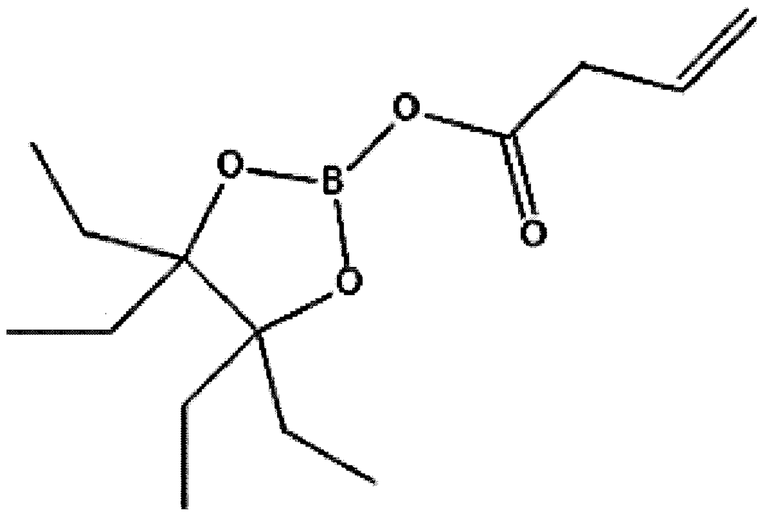

[Formula 1-B-1]

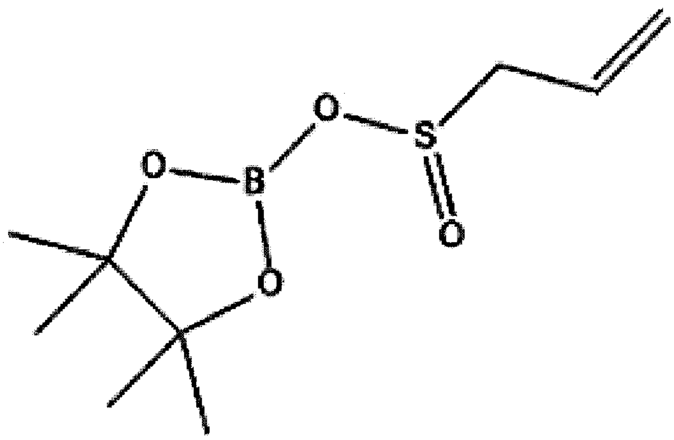

[Formula 1-B-2]

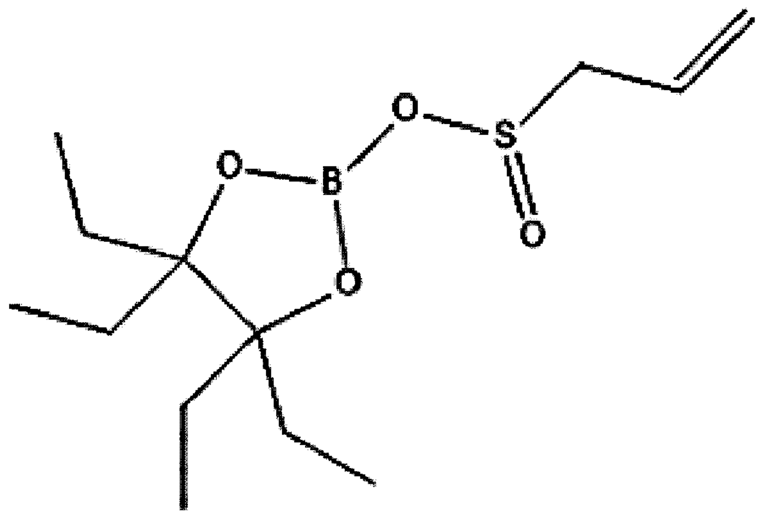

[Formula 1-C-1]

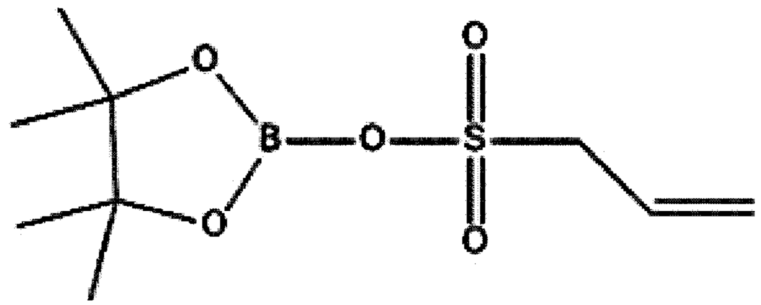

[Formula 1-C-2]

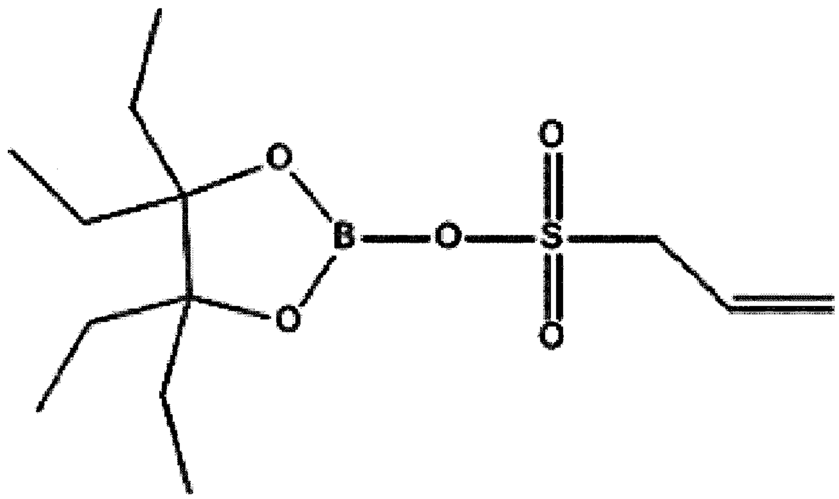

[Formula 2-A-1]

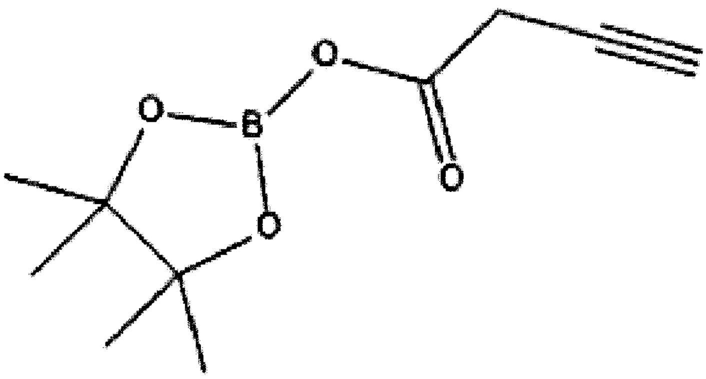

[Formula 2-A-2]

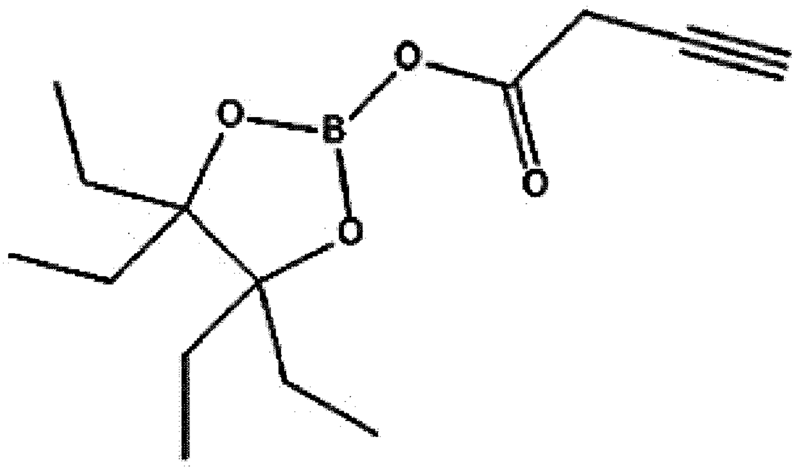

[Formula 2-B-1]

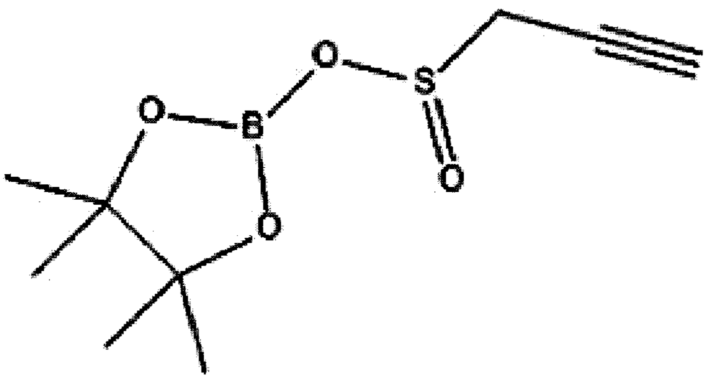

[Formula 2-B-2]

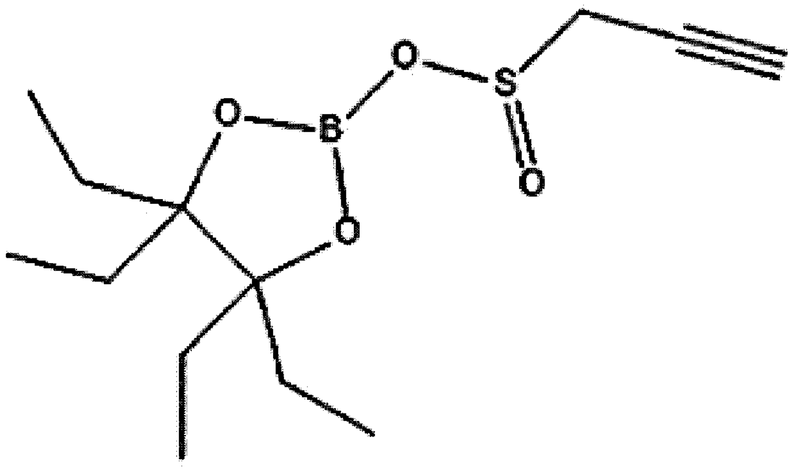

[Formula 2-C-1]

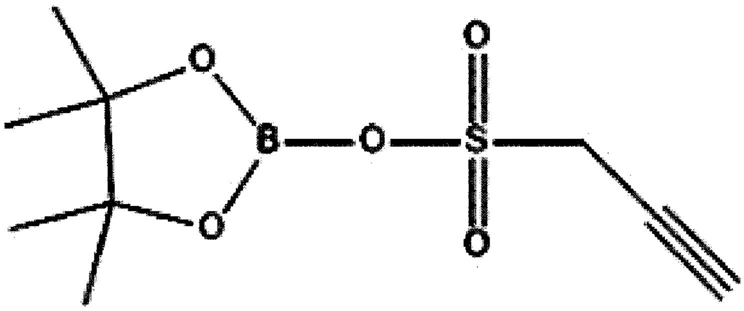

[Formula 2-C-2]

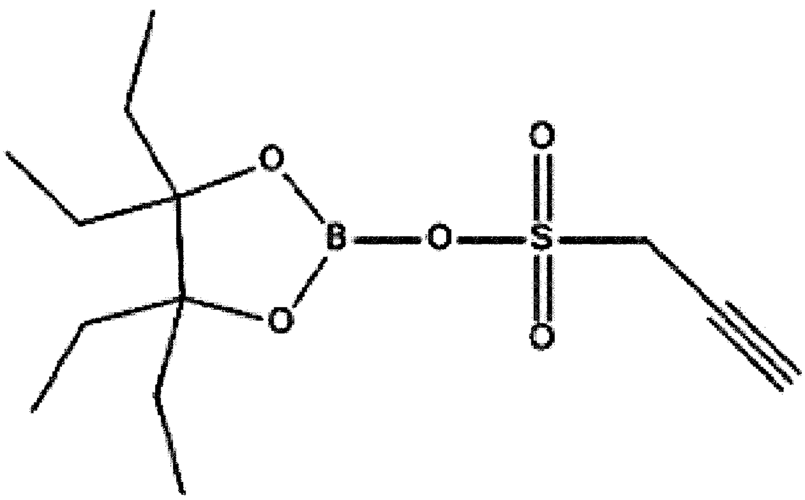

[7] The present disclosure provides a non-aqueous electrolyte, wherein in at least one of the above [1] to [6], the compound represented by Formula 1 above is included in an amount of 0.01 wt% to 10.0 wt% based on the weight of the non-aqueous electrolyte.

[8] The present disclosure provides a non-aqueous electrolyte, wherein in at least one of the above [1] to [7], the lithium salt includes at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB (LiB $(C_2O_4)_2$), $LiCF_3SO_3$, LiFSI($LiN(SO_2F)_2$), $LiCH_3SO_3$, $LiCF_3CO_2$, $LiCH_3CO_2$

and LiBETI($LiN(SO_2CF_2CF_3)_2$).

[9] The present disclosure provides a non-aqueous electrolyte, wherein in at least one of the above [1] to [8], the lithium salt is included in the non-aqueous electrolyte at a mole concentration of 0.5 M to 5.0 M.

[10] The present disclosure provides a non-aqueous electrolyte, wherein in at least one of the above [1] to [9], the organic solvent includes at least one selected from the group consisting of a cyclic carbonate-based organic solvent, a linear carbonate-based organic solvent, a linear ester-based organic solvent, and a cyclic ester-based organic solvent.

[11]The lithium secondary battery according to the present disclosure includes a positive electrode, a negative electrode facing the positive electrode, a separator disposed between the positive electrode and the negative electrode, and a non-aqueous electrolyte according to at least one of the above [1] to [10].

## [ADVANTAGEOUS EFFECTS]

The non-aqueous electrolyte of the present disclosure is characterized by using a cyclic borate-based compound containing an allyl group or a propargyl group in its structure as an additive. The cyclic borate-based compound according to the present disclosure may form a highly durable SEI film due to its high density while promoting lithium transport characteristics upon reduction at the negative electrode. At this time, the allyl group or propargyl group included in the cyclic borate-based compound may facilitate the access of the cyclic borate-based compound to the negative electrode during the reduction of the negative electrode, and improve reactivity, thereby further facilitating the formation of the SEI film derived from the cyclic borate-based compound described above. Accordingly, a lithium secondary battery including the non-aqueous electrolyte according to the present disclosure may exhibit improved life performance and storage performance, particularly improved life performance and storage performance at high temperatures and high voltages.

## [MODE FOR CARRYING OUT THE INVENTION]

It will be understood that terms or words used in the present disclosure and claims shall not be construed as being limited to having meanings defined in commonly used dictionaries, but should be interpreted as having meanings and concepts consistent with the technical idea of the present disclosure based on the principle that an inventor may appropriately define concepts of the terms to best explain the invention.

It will be further understood that the terms "include," "comprise," or "have" in this disclosure specify the presence of stated features, numbers, steps, elements, or combinations thereof, but do not preclude the presence or addition of one or more other features, numbers, steps, elements, or combinations thereof.

Meanwhile, before describing aspects of the present disclosure, unless otherwise specified in the present disclosure, the expression "*" denotes the same or different atom or a portion connected (binding site) between ends of a formula.

Also, the expressions "a" and "b" in the description of "a to b carbon atoms" in the disclosure each denote the number of carbon atoms included in a specific functional group. That is, the functional group may include "a" to "b" carbon atoms. For example, an "alkyl group having 1 to 5 carbon atoms" means an alkyl group containing 1 to 5 carbon atoms, that is, $CH_3$-, $CH_3CH_2$-, $CH_3CH_2CH_2$-, $(CH_3)_2CH$-, $CH_3CH_2CH_2CH_2$-, $(CH_3)_2CHCH_2$-, $CH_3CH_2CH_2CH_2CH_2$-, $(CH_3)_2CHCH_{2C}H_2$-, or the like.

In addition, in the present disclosure, an alkyl group, or an aryl group may both be substituted or unsubstituted. Unless otherwise defined, the term "substituted" means that at least one hydrogen bonded to carbon is substituted with an element other than hydrogen, and for example, it means being substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a cycloalkynyl group having 3 to 12 carbon atoms, a heterocycloalkyl group having 3 to 12 carbon atoms, a heterocycloalkenyl group having 3 to 12 carbon atoms, a heterocycloalkynyl group having 2 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, a haloaryl group having 6 to 20 carbon atoms, etc.

Hereinafter, the present invention will be described in more detail.

The non-aqueous electrolyte and/or lithium secondary battery according to the present disclosure may include at least one of the constitutions disclosed below, and may include any combination between technically possible constitutions among the following constitutions.

## Non-aqueous electrolyte

The present disclosure relates to a non-aqueous electrolyte.

Specifically, the present disclosure provides a non-aqueous electrolyte including a lithium salt, an organic

solvent, and an additive, wherein the additive includes a compound represented by the following Formula 1.

[Formula 1]

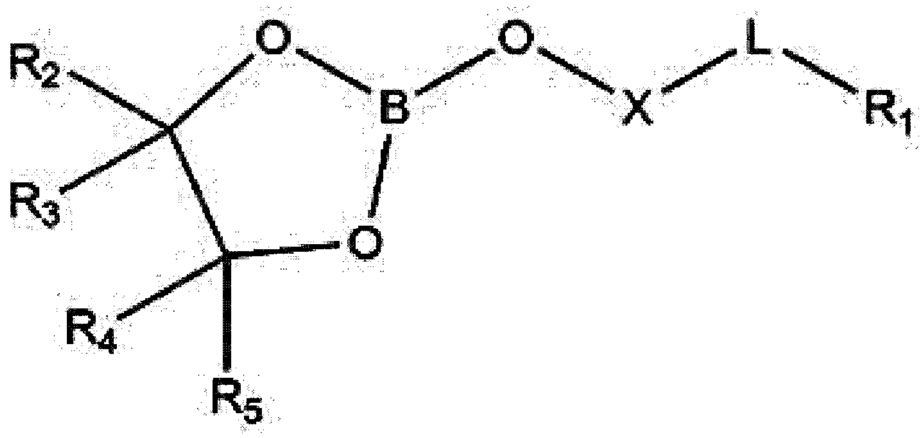

In Formula 1 above, $R_1$ is an allyl group or a propargyl group; $R_2$, $R_3$, $R_4$ and $R_5$ are each independently selected from hydrogen and an alkyl group having 1 to 5 carbon atoms; L is selected from a single bond and an alkylene group having 1 to 10 carbon atoms; and X is selected from -C(=O)-, -S(=O)- and $-S(=O)_2-$.

**(1) Lithium salt**

As the lithium salt used in the present disclosure, various lithium salts commonly used in a non-aqueous electrolyte for a lithium secondary battery may be used without limitation. For example, the lithium salt may include Li+ as a cation, and may include at least one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$ and $(CF_3CF_2SO_2)_2N^-$ as an anion.

Specifically, the lithium salt includes at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$), $LiCF_3SO_3$, LiFSI ($LiN(SO_2F)_2$), $LiCH_3SO_3$, $LiCF_3CO_2$, $LiCH_3CO_2$ and LiBETI ($LiN(SO_2CF_2CF_3)_2$). Specifically, the lithium salt includes at least one selected from the group consisting of $LiBF_4$, $LiClO_4$, $LiPF_6$, LiBOB ($LiB(C_2O_4)_2$), $LiCF_3SO_3$, LiTFSI ($LiN(SO_2CF_3)_2$), LiFSI (($LiN(SO_2F)_2$) and LiBETI ($LiN(SO_2CF_2CF_3)_2$).

The lithium salt may be included in the non-aqueous electrolyte at a concentration of 0.5M to 5.0M, specifically, 0.8M to 4.0M, and more specifically 0.8M to 2.0M. In the case in which the concentration of the lithium salt satisfies the above range, this may improve the Li+ transference number and the degree of dissociation of lithium ions, thereby improving the output characteristics of the battery.

**(2) Organic Solvent**

The organic solvent is a non-aqueous solvent commonly used in lithium secondary batteries, and is not limited as long as decomposition due to an oxidation reaction or the like during the charging and discharging of the battery can be minimized.

Specifically, the organic solvent may include at least one selected from a cyclic carbonate-based organic solvent, a linear carbonate-based organic solvent, a linear ester-based organic solvent and a cyclic ester-based organic solvent.

Specifically, the organic solvent may include a cyclic carbonate-based organic solvent, a linear carbonate-based organic solvent or a mixture thereof.

The cyclic carbonate-based organic solvent is an organic solvent having high viscosity and a high dielectric constant, and thus, is an organic solvent capable of dissociating a lithium salt well in an electrolyte, specific examples thereof may include at least one organic solvent selected from ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate, and more specifically, may include at least one selected from the group consisting of ethylene carbonate (EC) and fluoroethylene carbonate (FEC) .

In addition, the linear carbonate-based organic solvent is an organic solvent having low viscosity and a low dielectric constant, specifically may include at least one organic solvent selected from dimethyl carbonate (DMC), diethyl

carbonate (DEC), dipropyl carbonate, ethylmethyl carbonate (EMC), methylpropyl carbonate, and ethylpropyl carbonate, and more specifically, may include at least one selected from ethylmethyl carbonate (EMC) and diethyl carbonate (DEC).

Specifically, the organic solvent may be a mixture of a cyclic carbonate-based organic solvent and a linear carbonate-based organic solvent. The cyclic carbonate-based organic solvent and the linear carbonate-based organic solvent may be mixed in a volume ratio of 5:95 to 40:60, and specifically 7:93 to 25:75. When the mixing ratio of the cyclic carbonate-based organic solvent and the linear carbonate-based organic solvent satisfies the above range, both high dielectric constant and low viscosity characteristics may be simultaneously satisfied, resulting in excellent ionic conductivity.

In addition, to prepare an electrolyte with a high ionic conductivity, the organic solvent may further include at least one ester-based organic solvent selected from a linear ester-based organic solvent and a cyclic ester-based organic solvent in addition to at least one carbonate-based organic solvent selected from the cyclic carbonate-based organic solvent and linear carbonate-based organic solvent.

The linear ester-based organic solvent may include at least one selected from methyl acetate, ethyl acetate, propyl acetate, methyl propionate, ethyl propionate, propyl propionate, and butyl propionate.

In addition, the cyclic ester-based organic solvent specifically may include at least one selected from the group consisting of γ-butyrolactone, γ-valerolactone, γ-caprolactone, σ-valerolactone, and ε-caprolactone.

Meanwhile, the organic solvent may be used by adding organic solvents commonly used in non-aqueous electrolytes without limitation, if necessary. For example, it may further include at least one organic solvent selected from an ether-based organic solvent, a glyme-based solvent, and a nitrile-based organic solvent.

Any one selected from dimethyl ether, diethyl ether, dipropyl ether, methylethyl ether, methylpropyl ether, ethylpropyl ether, 1,3-dioxolane (DOL), and 2,2-bis (trifluoromethyl )-1,3-dioxolane (TFDOL), and a mixture of two or more thereof may be used as the ether-based solvent, but is not limited thereto.

The glyme-based solvent has a high dielectric constant and low surface tension compared to linear carbonate-based organic solvents, and may include at least one selected from dimethoxyethane (glyme, DME), diethoxyethane, digylme, triglyme, and tetra-glyme (TEGDME) as a solvent with low reactivity with metals, but is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

**(3) Additive**

The non-aqueous electrolyte includes an additive.

The additive includes a compound represented by the following Formula 1.

[Formula 1]

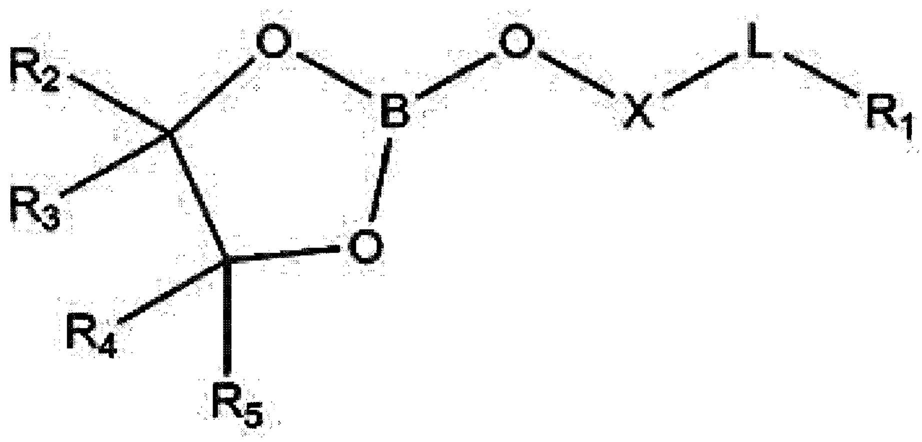

In Formula 1 above, $R_1$ is an allyl group or a propargyl group; $R_2$, $R_3$, $R_4$ and $R_5$ are each independently selected from hydrogen and an alkyl group having 1 to 5 carbon atoms; L is selected from a single bond and an alkylene group having 1 to 10 carbon atoms; and X is selected from -C(=O)-, -S(=O)- and -S(=O)$_2$-.

The compound represented by Formula 1 above is reduced at the negative electrode, thereby forming a highly durable SEI film with excellent lithium transport characteristics and high density on the negative electrode.

Generally, cyclic borates are substances capable of forming an SEI film upon reduction at the negative electrode,

but after being solvated with an organic solvent, they become too bulky to access the negative electrode, and this reduced accessibility becomes a factor that makes reactions during the reduction of the negative electrode difficult. In this regard, the compound represented by Formula 1 according to the present disclosure is characterized in that an allyl group ($-CH_2-CH=CH_2$) or a propargyl group ($-CH_2-C\equiv CH$) in the structure is bonded to a cyclic borate. Since the allyl or propargyl group has high reactivity due to its LUMO characteristics and is easily accessible to the negative electrode, the cyclic borate combined with the allyl or propargyl group also becomes easily accessible to the negative electrode, and thus the reactivity of the cyclic borate at the negative electrode may be promoted. These effects cannot be achieved with substituents other than allyl and propargyl groups (such as alkyl groups).

In Formula 1 above, $R_1$ may be an allyl group or a propargyl group, and more specifically may be an allyl group.

In Formula 1 above, $R_2$, $R_3$, $R_4$ and $R_5$ may be each independently selected from hydrogen and an alkyl group having 1 to 5 carbon atoms, specifically may be each independently an alkyl group having 1 to 5 carbon atoms, more specifically may be each independently an alkyl group having 1 to 3 carbon atoms, even more specifically may be each independently selected from a methyl group and an ethyl group, and even more specifically may be a methyl group. In the above-described types, $R_2$, $R_3$, $R_4$ and $R_5$ can achieve the effect of forming an SEI film having stable reactivity and excellent durability, without inhibiting the effect resulting from the combination of cyclic borate with an allyl group or a propargyl group.

In Formula 1 above, L may be selected from a single bond and an alkylene group having 1 to 10 carbon atoms, and the effects of improving negative electrode accessibility and reactivity of the cyclic borate according to a vinyl group or a propargyl group may be easily achieved within the above range. In Formula 1 above, L may be selected from a single bond and an alkylene group having 1 to 3 carbon atoms, and specifically may be a single bond.

In Formula 1 above, X is selected from -C(=O)-, -S(=O)- and $-S(=O)_2-$. X connects a cyclic borate with an alkyl group or a propargyl group, and may contribute to improving lithium transport characteristics, film durability, and oxidation resistance during the formation of an SEI film. In Formula 1 above, X specifically may be selected from -C(=O)- and -S(=O)-.

Specifically, the compound represented by Formula 1 above includes at least one compound selected from the group consisting of compounds represented by Formula 1-A, Formula 1-B, Formula 1-C, Formula 2-A, Formula 2-B and Formula 2-C below. More specifically, the compound represented by Formula 1 above includes at least one compound selected from the group consisting of compounds represented by Formula 1-A, Formula 1-B, and Formula 1-C below. More specifically, the compound represented by Formula 1 above includes at least one compound selected from the group consisting of compounds represented by Formula 1-A and Formula 1-B below.

[Formula 1-A]

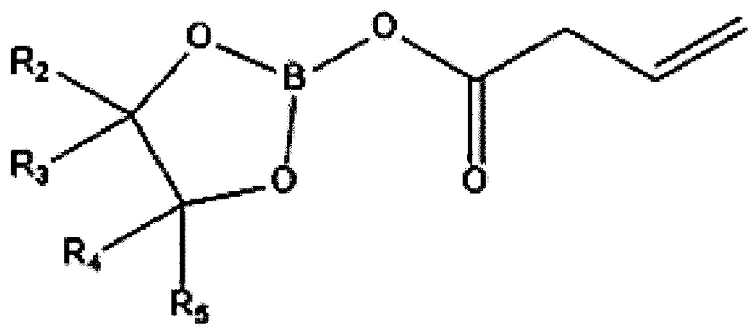

[Formula 1-B]

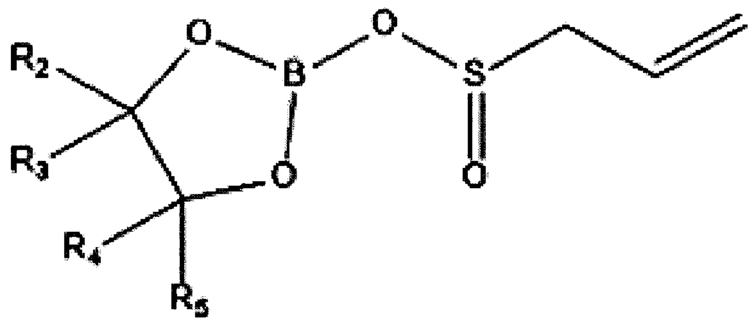

[Formula 1-C]

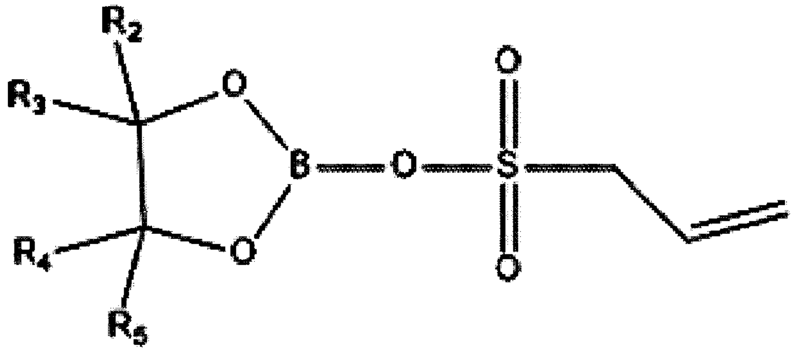

[Formula 2-A]

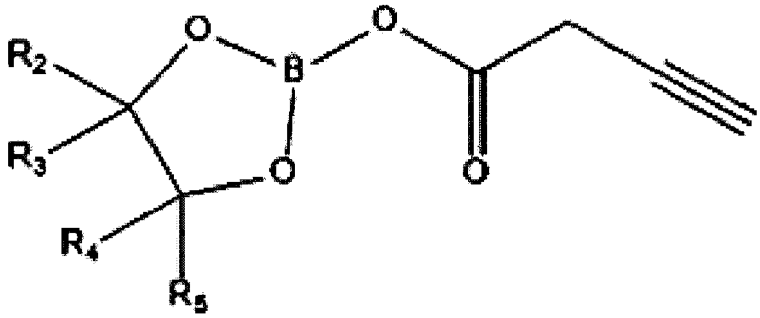

[Formula 2-B]

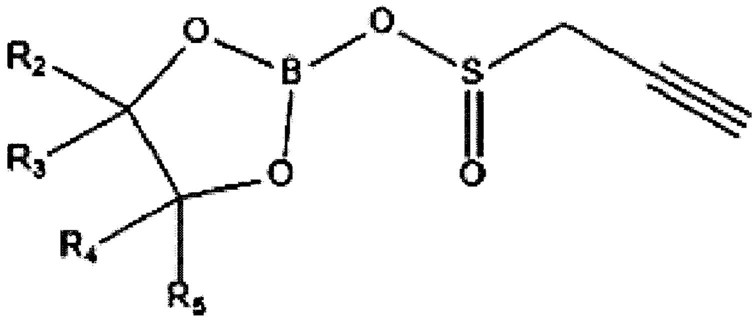

[Formula 2-C]

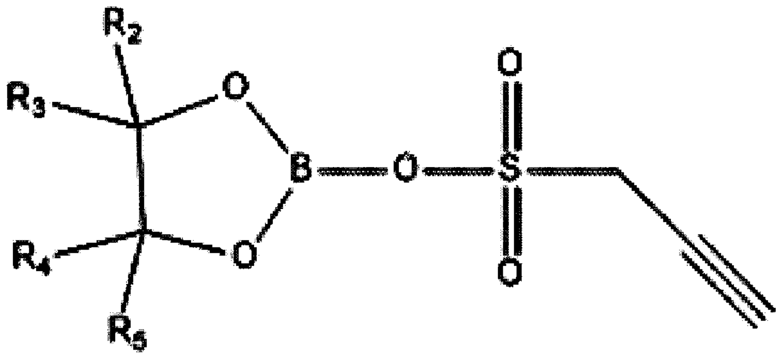

In the above Formula 1-A, Formula 1-B, Formula 1-C, Formula 2-A, Formula 2-B and Formula 2-C, $R_2$, $R_3$, $R_4$ and $R_5$ are as

defined in Formula 1 above.

The compound represented by Formula 1 above may include at least one selected from the group consisting of compounds represented by the following Formulas 1-A-1, 1-A-2, 1-B-1, 1-B-2, 1-C-1, 1-C-2, 2-A-1, 2-A-2, 2-B-1, 2-B-2, 2-C-1 and 2-C-2, specifically may include at least one selected from the group consisting of compounds represented by the following Formulas 1-A-1, 1-A-2, 1-B-1, 1-B-2, 1-C-1 and 1-C-2, more specifically may include at least one selected from the group consisting of compounds represented by the following Formulas 1-A-1, 1-A-2, 1-B-1 and 1-B-2, and even more specifically may include at least one selected from the group consisting of compounds represented by the following Formulas 1-A-1 and 1-A-2.

[Formula 1-A-1]

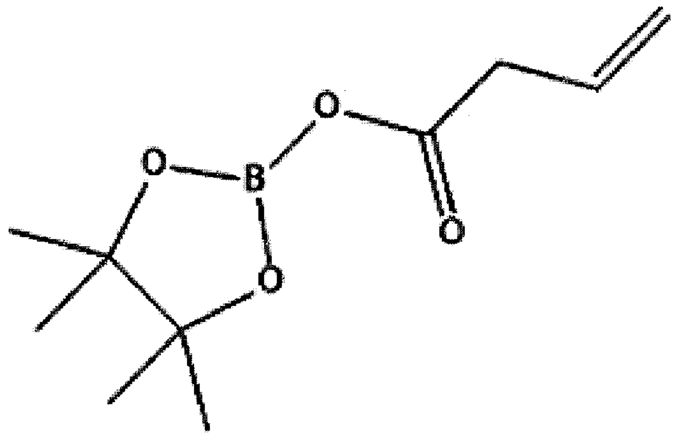

[Formula 1-A-2]

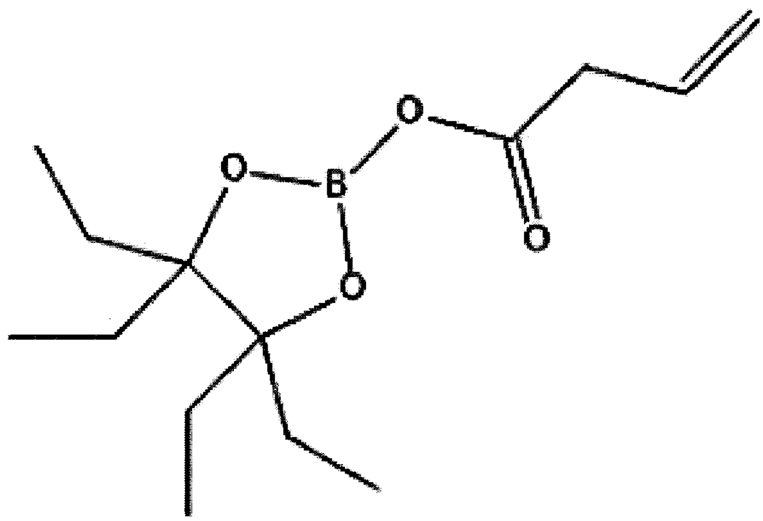

[Formula 1-B-1]

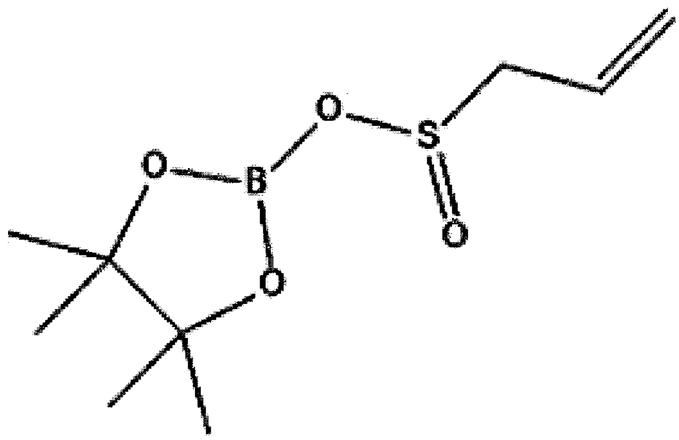

[Formula 1-B-2]

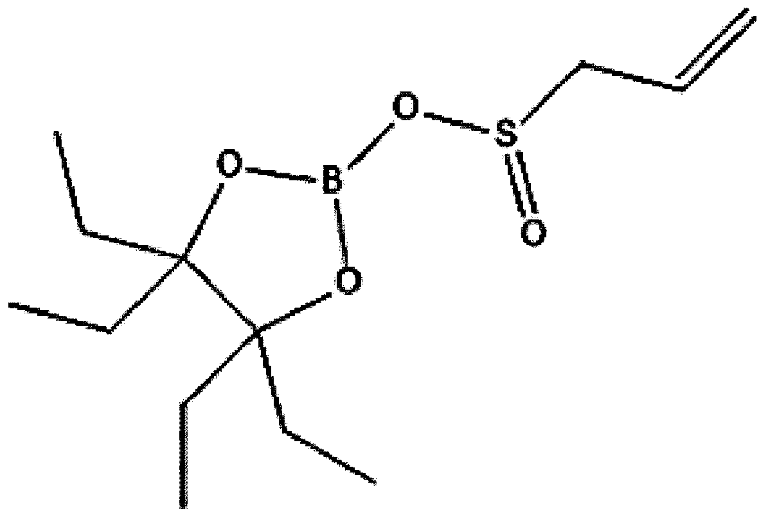

[Formula 1-C-1]

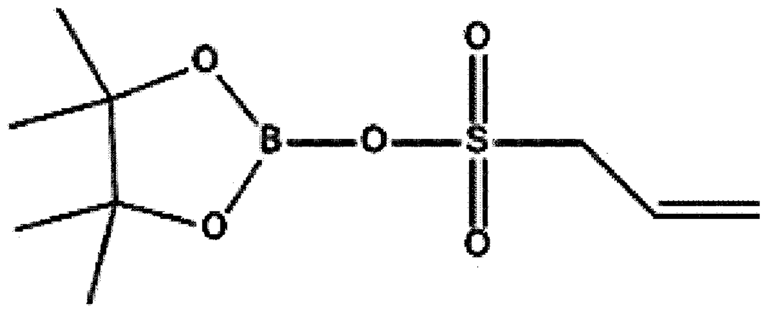

[Formula 1-C-2]

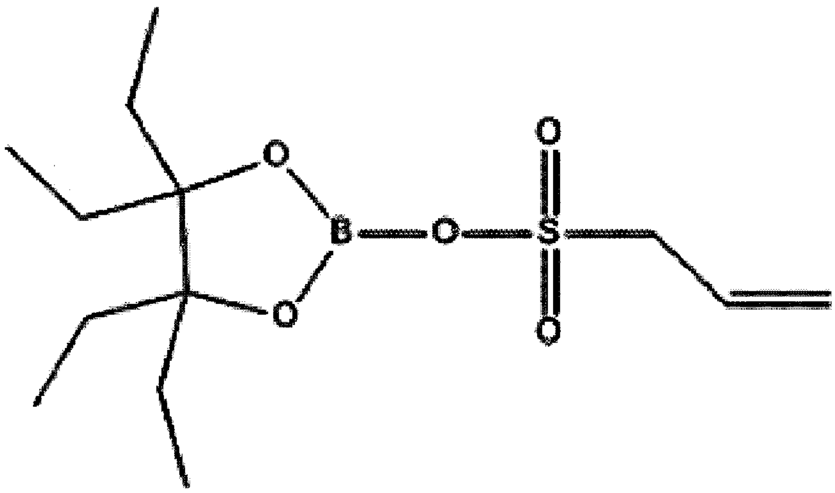

[Formula 2-A-1]

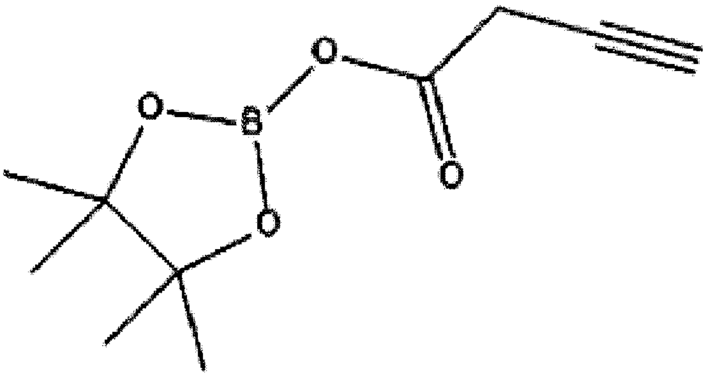

[Formula 2-A-2]

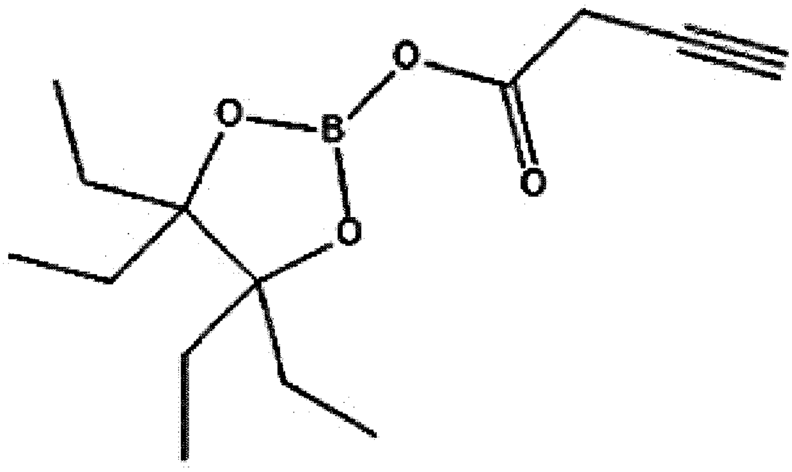

[Formula 2-B-1]

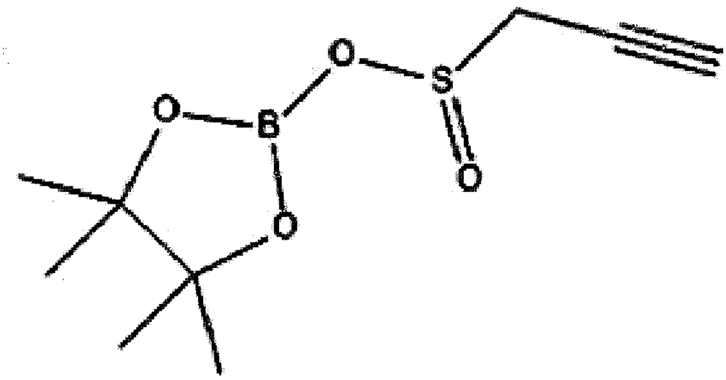

[Formula 2-B-2]

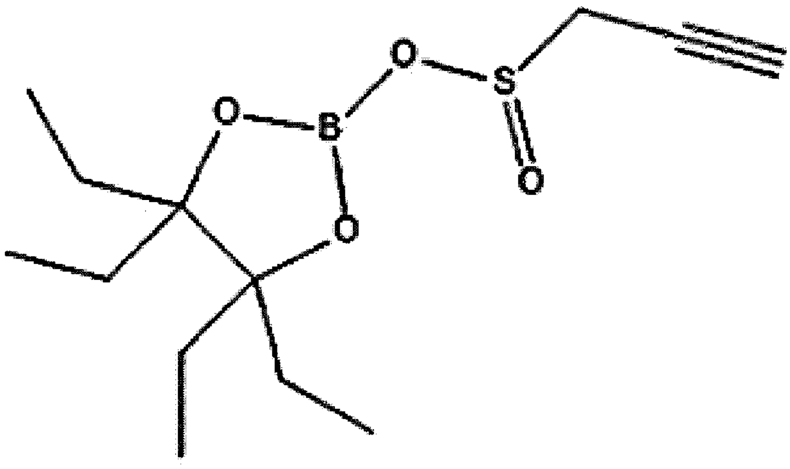

[Formula 2-C-1]

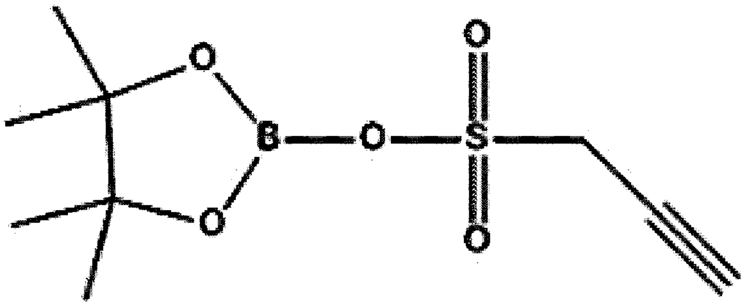

[Formula 2-C-2]

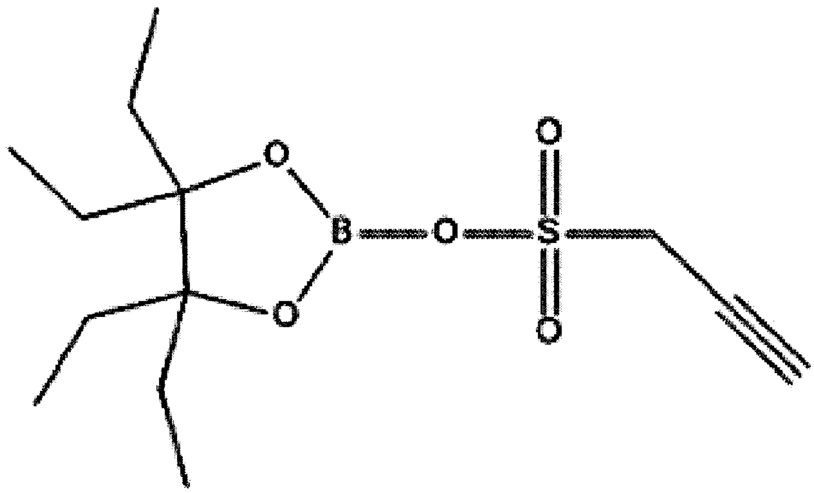

Specifically, the compound represented by Formula 1 above may be included in an amount of 0.01 wt% to 10 wt%, specifically, 0.05 wt% to 5.0 wt%, and more specifically 2.0 wt% to 4.0 wt%, based on the total weight of the non-aqueous electrolyte. When the compound represented by Formula 1 above is used within the described range, an increase in the resistance can be prevented when added in excess, while allowing a flexible and highly durable SEI film to form on the negative electrode.

The additive may further include an additional additive together with the compound represented by Formula 1. The additional additive may be included in the non-aqueous electrolyte to prevent the non-aqueous electrolyte from being decomposed to cause collapse of the negative electrode in a high output environment, or further improve low-temperature high-rate discharge characteristics, high-temperature stability, overcharge protection, and a battery swelling suppression effect at high temperatures.

Specifically, the additional additive may include at least one selected from the group consisting of lithium difluorophosphate (LiDFP), vinylene carbonate, vinyl ethylene carbonate, fluoroethylene carbonate, propane sultone, propene sultone, succinonitrile, adiponitrile, ethylene sulfate, lithium bis-(oxalato)borate (LiBOB), lithium difluorophosphate (LiDFP), Tris(trimethylsilyl) phosphate (TMSPa), and Tris(trimethylsilyl) Phosphite (TMSPi), and specifically may include lithium difluorophosphate (LiDFP).

The additional additive may be included in an amount of 0.1 wt% to 15.0 wt%, and specifically 0.3 wt% to 3.0 wt% in the non-aqueous electrolyte.

When the non-aqueous electrolyte further includes the additional additive, the weight ratio of the compound represented by Formula 1 above and the additional additive may be 45:55 to 99:1, specifically 50:50 to 95:5, and more specifically 70:30 to 85:15. When the ratio is within the above ranges, life performance and high-temperature storage performance can be improved to a more desirable level.

## Lithium secondary battery

In addition, the present disclosure provides a lithium secondary battery comprising the above-mentioned non-aqueous electrolyte.

Specifically, the lithium secondary battery according to the present disclosure includes a positive electrode, a negative electrode facing the positive electrode, a separator disposed between the positive electrode and the negative electrode, and the above-described non-aqueous electrolyte.

After an electrode assembly, in which the positive electrode, the negative electrode facing the positive electrode, and separator interposed between the positive electrode and the negative electrode are included, is accommodated in a battery case, the lithium secondary battery may be prepared by injecting the non-aqueous electrolyte thereto.

Since the non-aqueous electrolyte has been described above, the negative electrode, positive electrode, and separator will be described below.

### (1) Positive Electrode

The positive electrode may include a positive electrode current collector and a positive electrode active material layer disposed on at least one surface of the positive electrode current collector.

The positive electrode current collector is not particularly limited so long as it has a high conductivity without causing adverse chemical changes in the battery. Specifically, the positive electrode current collector may include at least one selected from copper, stainless steel, aluminum, nickel, titanium, fired carbon, and aluminum-cadmium alloy, and preferably may include aluminum.

The positive electrode current collector generally has a thickness of 3 to 500 $\mu$m.

Microscopic irregularities may be formed on the surface of the collector to improve the adhesion of the negative electrode active material. For example, the positive electrode current collector may be used in various shapes such as a film, a sheet, a foil, a net, a porous body, a foam body, a non-woven fabric body, and the like.

The positive electrode active material layer may be disposed on at least one surface of the positive electrode current collector. Specifically, the positive electrode active material layer may be disposed on one or both surfaces of the positive electrode current collector.

The positive electrode active material layer may include a positive electrode active material.

The positive electrode active material is a compound capable of reversibly intercalating and deintercalating lithium, wherein the positive electrode active material may include a lithium transition metal composite oxide including lithium and at least one transition metal selected from nickel, cobalt, manganese, and aluminum, and may preferably include a lithium transition metal composite oxide including lithium and transition metals including nickel, cobalt, and manganese.

Examples of the lithium transition metal composite oxide include a lithium-manganese-based oxide (for example, $LiMnO_2$, $LiMn_2O_4$, etc.), a lithium-cobalt-based oxide (for example, $LiCoO_2$, etc.), a lithium-nickel-based oxide (for example, $LiNiO_2$, etc.), a lithium-nickel-manganese-based oxide (for example" $LiNi_{1-Y}Mn_YO_2$ (wherein 0<Y<1), $LiMn_{2-z}Ni_zO_4$ (wherein 0 < Z < 2), etc. ) , a lithium-nickel-cobalt-based oxide (for example, $LiNi_{1-Y1}Co_{Y1}O_2$ (wherein 0<Y1<1), etc.), a lithium-manganese-cobalt-based oxide (for example, $LiCo_{1-Y2}Mn_{Y2}O_2$ (wherein 0<Y2<1), $LiMn_{2-z1}Co_{z1}O_4$ (wherein 0 < Z1 < 2), etc.), a lithium-nickel-manganese-cobalt-based oxide (for example, Li $(Ni_pCo_qMn_{r1})O_2$ (wherein 0 < p < 1, 0 < q < 1, 0 < r1 < 1, p+q+r1=1) or Li $(Ni_{p1}Co_{q1}Mn_{r2})$ $O_4$ (wherein 0 < p1 < 2, 0 <q1<2, 0 < r2 < 2, p1+q1+r2=2), etc.), or a lithium-nickel-cobalttransition metal (M) oxide (for example, $Li(Ni_{p2}Co_{q2}Mn_{r3}M_{S2})O_2$ (wherein, M is selected from Al, Fe, V, Cr, Ti, Ta, Mg and Mo, p2, q2, r3 and s2 are each an atomic fraction of independent elements, 0 < p2 < 1, 0 < q2 < 1, 0 < r3 < 1, 0 < s2 < 1, p2+q2+r3+s2=1), etc.) and the like, and among them, any one or two or more compounds may be included. Among them, in view of enhancing the capacity characteristics and stability of a battery, the lithium transition metal composite oxide may be $LiCoO_2$, $LiMnO_2$, $LiNiO_2$, a lithium nickel-manganese-cobalt oxide (for example, $Li(Ni_{0.6}Mn_{0.2}Co_{0.2})O_2$, Li $(Ni_{0.5}Mn_{0.3}Co_{0.2})O_2$, Li $(Ni_{0.7}Mn_{0.15}Co_{0.15})O_2$ or $Li(Ni_{0.8}Mn_{0.1}Co_{0.1})O_2$, etc.), or a lithium nickel cobalt aluminum oxide (for example, $Li(Ni_{0.8}Co_{0.15}Al_{0.05})O_2$, etc.) and the like, and in consideration of the remarkable improvement effects caused by controlling the type and content ratio of the constituent elements forming the lithium transition metal composite oxide, the lithium transition metal composite oxide may be Li $(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$ or $Li(Ni_{0.8}Mn_{0.1}Co_{0.1})O_2$ and the like, and among them, any one or a mixture of two or more thereof may be used.

More specifically, the positive electrode active material is a lithium transition metal composite oxide, and may contain 60 mol % or more of nickel, based on the total number of moles of transition metals included in the lithium transition metal composite oxide. Specifically, the positive electrode active material is a lithium transition metal composite oxide and the transition metal includes nickel, and at least one selected from manganese, cobalt, and aluminum, and may include nickel in an amount of 60 mol % or more, specifically 60 mol % to 90 mol %, based on the total number of moles of the transition metal. When the lithium transition metal composite oxide using such a high nickel content is used together with the above-described non-aqueous electrolyte, it is preferable for the purpose of reducing by-products in the gas phase generated by structural collapse.

In addition, the positive electrode active material may include a lithium composite transition metal oxide represented by the following Formula A.

[Formula A] $Li_{1+x}(Ni_aCo_bMn_cM_d)O_2$

In Formula A, M is at least one selected from W, Cu, Fe, V, Cr, Ti, Zr, Zn, Al, In, Ta, Y, La, Sr, Ga, Sc, Gd, Sm, Ca, Ce, Nb, Mg, B and Mo, and 1+x, a, b, c and d are each independent atomic fractions of elements, $0 \leq x \leq 0.2$, $0.50 \leq a < 1$, $0 < b \leq 0.25$, $0 < c \leq 0.25$, $0 \leq d \leq 0.1$, a+b+c+d=1.

Preferably, a, b, c and d may be $0.70 \leq a \leq 0.95$, $0.025 \leq b \leq 0.20$, $0.025 \leq c \leq 0.20$, and $0 \leq d \leq 0.05$, respectively.

Preferably, a, b, c and d may be $0.80 \leq a \leq 0.95$, $0.025 \leq b \leq 0.15$, $0.025 \leq c \leq 0.15$, and $0 \leq d \leq 0.05$, respectively.

Preferably, a, b, c and d may be $0.85 \leq a \leq 0.90$, $0.05 \leq b \leq 0.10$, $0.05 \leq c \leq 0.10$, and $0 \leq d \leq 0.03$, respectively.

The positive electrode active material may be included in an amount of 80 wt % to 99 wt %, preferably 92 wt % to 98.5 wt % in the positive electrode active material layer in consideration of the sufficient capacity of the positive electrode active material.

The positive electrode active material layer may further include a binder and/or a conductive material together

with the above-described positive electrode active material.

The binder is a component which assists in the cohesion of an active material, a conductive material, and the like and the cohesion to a current collector, and specifically, may include at least one selected from polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, and fluorine rubber, and preferably may include polyvinylidene fluoride.

The binder may be included in an amount of 1.0 wt % to 20 wt %, preferably 1.2 wt% to 10 wt% in the positive electrode active material layer in terms of sufficiently securing a cohesive force between components such as the positive electrode active material.

The conductive material can be used to assist and improve the conductivity of the secondary battery, and is not particularly limited as long as it has conductivity without causing chemical changes. Specifically, the positive electrode conductive material may include at least one selected from graphite such as natural graphite or artificial graphite; carbon black such as carbon black, acetylene black, Ketjen black, channel black, furnace black, lamp black, and thermal black; conductive fiber such as carbon fiber and metallic fiber; conductive tubes such as carbon nanotubes; fluoro carbon; metallic powder such as aluminum, and nickel powder; conductive whiskers such as zinc oxide and potassium titanate; conductive metal oxide such as titanium oxide; and polyphenylene derivatives, and preferably, the conductive material may include carbon black in terms of improving conductivity.

The conductive material may be included in an amount of 1.0 wt % to 20 wt %, preferably 1.2 wt% to 10 wt% in the positive electrode active material layer in terms of sufficiently securing electric conductivity.

The positive electrode active material layer may have a thickness of 30 μm to 400 μm, preferably 40 μm to 110 μm.

The positive electrode may be manufactured by coating the positive electrode current collector with a positive electrode slurry including a positive electrode active material and selectively a binder, a conductive material and a solvent for forming a positive electrode slurry, and then drying and rolling.

The solvent for forming a positive electrode slurry may include an organic solvent such as N-methyl-2-pyrrolidone (NMP). The solid content of the positive electrode slurry may be 40 wt% to 90 wt%, specifically 50 wt% to 80 wt%.

**(2) Negative Electrode**

The negative electrode faces the positive electrode.

The negative electrode may include a negative electrode current collector and a negative electrode active material layer disposed on at least one surface of the negative electrode current collector.

The negative electrode current collector is not particularly limited so long as it has a high conductivity without causing adverse chemical changes in the battery. Specifically, copper, stainless steel, aluminum, nickel, titanium, fired carbon, copper or stainless steel that is surface-treated with one of carbon, nickel, titanium, silver, and the like, and an aluminum-cadmium alloy may be used as the negative electrode current collector.

The negative electrode current collector generally has a thickness of 3 to 500 μm.

Microscopic irregularities may be formed on the surface of the negative electrode collector to improve the adhesion of the negative electrode active material. For example, the negative electrode current collector may be used in various shapes such as a film, a sheet, a foil, a net, a porous body, a foam body, a non-woven fabric body, and the like.

The negative electrode active material layer may be disposed on at least one surface of the negative electrode current collector. Specifically, the negative electrode active material layer may be disposed on one or both surfaces of the negative electrode current collector.

The negative electrode active material layer may include a negative electrode active material.

The negative electrode active material is a substance capable of reversibly intercalating and deintercalating lithium, and may include at least one selected from a carbon-based active material, a silicon-based active material, and a lithium metal, specifically may include at least one selected from a carbon-based active material and a silicon-based active material, and more specifically may include a silicon-based active material.

The carbon-based active material may include at least one selected from artificial graphite, natural graphite, hard carbon, soft carbon, carbon black, graphene, and fibrous carbon, preferably at least one selected from artificial graphite and natural graphite.

The average particle diameter ($D_{50}$) of the carbon-based active material may be in the range of 10 μm to 30 μm, and preferably 15 μm to 25 μm in terms of ensuring the structural stability during charging and discharging and reducing side reactions with an electrolyte.

The silicon-based active material may include at least one selected from a compound represented by $SiO_x$ ($0 \leq x < 2$) and a siliconcarbon composite. In the case of $SiO_2$, since lithium cannot be stored because it does not react with lithium ions, and x is preferably within the above range. More preferably, the silicon-based active material may be SiO.

When the silicon-based active material is used as a negative electrode active material, a flexible and durabilityimproved SEI layer may be formed on the surface of the negative electrode by the non-aqueous electrolyte described above, thereby preventing damage to the SEI layer due to the volume expansion of the silicon-based active material, as well as preventing an increase in the thickness of the SEI layer and consumption of the electrolyte caused by the exposure of a new silicon-based active material surface due to the volume expansion, which is very desirable.

The average particle size ($D_{50}$) of the silicon-based active material may be 1$\mu$m to 30$\mu$m, preferably 2$\mu$m to 15$\mu$m in terms of ensuring the structural stability during charging and discharging and reducing side reactions with an electrolyte.

The negative electrode active material may be included in an amount of 60 wt% to 99 wt%, specifically 75 wt% to 95 wt% in the negative electrode active material layer.

The negative electrode active material layer may further include a binder and/or a conductive material together with the above-described negative electrode active material.

The binder is used to improve battery performance by improving adhesion between the negative electrode active material layer and the negative electrode current collector, for example, may include at least one selected from a polyvinylidene fluoridehexafluoropropylene copolymer (PVDF-co-HFP), polyvinylidenefluoride(PVDF), polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluororubber, and a material in which hydrogen is substituted with Li, Na or Ca, and may also include various copolymers thereof.

The binder may be included in an amount of 0.5 wt% to 10 wt%, specifically 1.0 wt% to 5.0 wt% in the negative electrode active material layer.

Any conductive material may be used without particular limitation so long as it has conductivity without causing adverse chemical changes in the battery, and, for example, a conductive material, such as: graphite such as natural graphite or artificial graphite; carbon black such as carbon black, acetylene black, Ketjen black, channel black, furnace black, lamp black, and thermal black; conductive fibers such as carbon fibers or metal fibers; conductive tubes such as carbon nanotubes; fluoro carbon; metallic powder such as aluminum, and nickel powder; conductive whiskers such as zinc oxide and potassium titanate; conductive metal oxide such as titanium oxide; polyphenylene derivatives, and the like, may be used.

The conductive material may be included in an amount of 0.5 wt% to 10 wt%, specifically 1.0 wt% to 5.0 wt% in the negative electrode active material layer.

The negative electrode active material layer may have a thickness of 10 $\mu$m to 100 $\mu$m, preferably 50 $\mu$m to 80 $\mu$m.

The negative electrode may be manufactured by coating the negative electrode current collector with a negative electrode slurry including a negative electrode active material and selectively a binder, a conductive material and a solvent for forming a negative electrode slurry, and then drying and rolling.

The solvent for forming a negative electrode slurry may include, for example, at least one selected from distilled water, N-methyl-2-pyrrolidone (NMP), ethanol, methanol, and isopropyl alcohol, preferably distilled water, for the purpose of facilitating the dispersion of the negative electrode active material, the binder and/or the conductive material. The solid content of the negative electrode slurry may be 30 wt% to 80 wt%, and specifically may be 40 wt% to 70 wt%.

### (3) Separator

In addition, as the separator, a common porous polymer film typically used as a separator, for example, a porous polymer film prepared with a polyolefin-based polymer, such as an ethylene homocopolymer, a propylene homocopolymer, an ethylene/butene copolymer, an ethylene/hexene copolymer, and an ethylene/methacrylate copolymer may be used alone, or in a laminated form thereof. Alternatively, a typical porous non-woven fabric, for example, a non-woven fabric formed of a glass fiber having a high melting point or polyethylene terephthalate fiber may be used, but the present disclosure is not limited thereto. Also, a coated separator including a ceramic component or a polymer material may be used to secure heat resistance or mechanical strength, and may be selectively used in a single-layered or a multi-layered structure.

A shape of the lithium secondary battery of the present invention is not particularly limited, but a cylindrical type using a can, a prismatic type, a pouch type, or a coin type may be used.

Hereinafter, the present disclosure will be described in detail, according to examples. However, the invention may be embodied in many different forms and should not be construed as being limited to the embodiments set forth herein. Rather, these example embodiments are provided so that this description will be thorough and complete, and will fully convey the scope of the present disclosure to those skilled in the art.

## Examples and Comparative Examples

### Example 1

(Preparation of Non-Aqueous Electrolyte)

A mixture of ethylene carbonate (EC) and ethylmethyl carbonate (EMC) was used in a volume ratio of 30:70 as an organic solvent.

$LiPF_6$ as a lithium salt and a compound represented by Formula 1-A-1 as an additive were added to the organic solvent to prepare a non-aqueous electrolyte.

The $LiPF_6$ was included in the non-aqueous electrolyte at concentrations of 1.0 M.

The compound represented by Formula 1-A-1 was included in an amount of 3.0 wt% in the non-aqueous electrolyte.

[Formula 1-A-1]

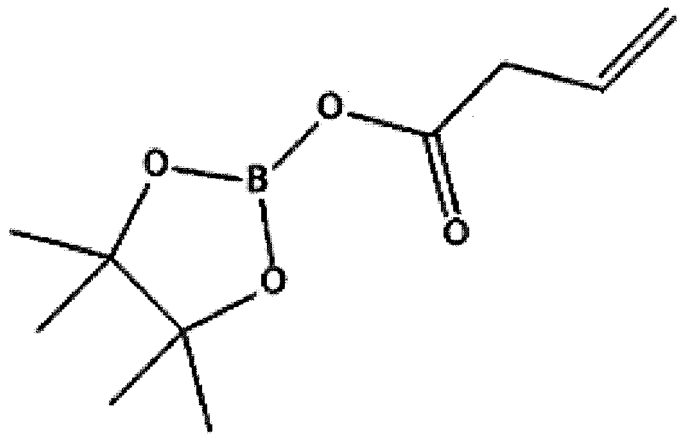

(Preparation of Secondary Battery)

A positive electrode active material ($Li[Ni_{0.85}Co_{0.05}Mn_{0.07}Al_{0.03}]O_2$), a conductive material (carbon nanotube), and a binder(polyvinylidene fluoride) were added to N-methyl-2-pyrrolidone (NMP) as a solvent, at a weight ratio of 97.74:0.70:1.56 to prepare a positive electrode mixture slurry (solid content: 75.5 wt%). The positive electrode mixture slurry was applied on one surface of a positive electrode current collector (Al thin film) having a thickness of 12 μm, dried and then roll-pressed to prepare a positive electrode.

A negative electrode active material (natural graphite): a conductive material (carbon black): a binder (styrene-butadiene rubber (SBR)-carboxymethyl cellulose (CMC)) were added in a weight ratio of 96.15:1.55:2.30 to distilled water, which was a solvent, to prepare a negative electrode mixture slurry (solid content 26 wt%). The negative electrode mixture slurry was applied on one surface of a negative electrode current collector (Cu thin film) having a thickness of 15 μm, dried and then roll-pressed to form a negative electrode active material layer (thickness: 179.8μm) and prepare a negative electrode.

In a dry room, a polyethylene porous polymer separator was interposed between the positive electrode and the negative electrode prepared above, and then the prepared non-aqueous electrolyte was injected thereto to prepare a secondary battery.

**Example 2**

A non-aqueous electrolyte and a lithium secondary battery were prepared in the same manner as in Example 1 except that 0.05 wt% of the compound represented by Formula 1-A-1 was added to the non-aqueous electrolyte instead of 3.0 wt%.

**Example 3**

A non-aqueous electrolyte and a lithium secondary battery were prepared in the same manner as in Example 1 except that 5.0 wt% of the compound represented by Formula 1-A-1 was added to the non-aqueous electrolyte instead of 3.0 wt%.

Example 4

A non-aqueous electrolyte and a lithium secondary battery were prepared in the same manner as in Example 1 except that 3.0 wt% of the compound represented by Formula 1-B-1 was added to the non-aqueous electrolyte instead of adding 3.0 wt%. of the compound represented by Formula 1-A-1.

[Formula 1-B-1]

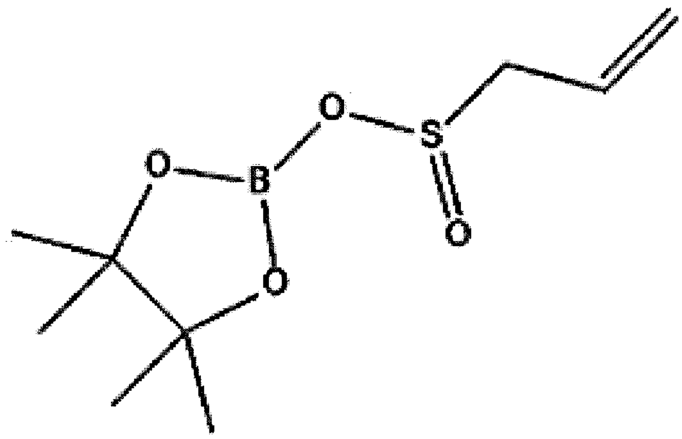

**Example** 5

A non-aqueous electrolyte and a lithium secondary battery were prepared in the same manner as in Example 4 except that 0.05 wt% of the compound represented by Formula 1-B-1 was added to the non-aqueous electrolyte instead of 3.0 wt%.

**Example 6**

A non-aqueous electrolyte and a lithium secondary battery were prepared in the same manner as in Example 4 except that 5.0 wt% of the compound represented by Formula 1-B-1 was added to the non-aqueous electrolyte instead of 3.0 wt%.

**Comparative Example 1**

A non-aqueous electrolyte and a lithium secondary battery were prepared in the same manner as in Example 1 except that the compound represented by Formula 1-A-1 was not added.

**Comparative Example 2**

A non-aqueous electrolyte and a lithium secondary battery were prepared in the same manner as in Example 1 except that 3.0 wt% of the compound represented by Formula 3 below was added to the non-aqueous electrolyte instead of adding 3.0 wt% of the compound represented by Formula 1-A-1.

[Formula 3]

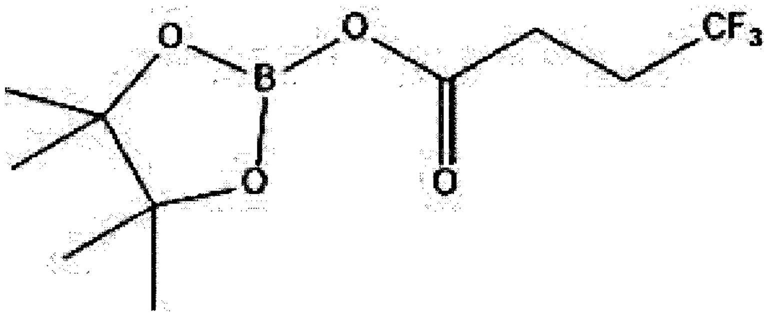

**Comparative Example 3**

A non-aqueous electrolyte and a lithium secondary battery were prepared in the same manner as in Example 1 except that 3.0 wt% of the compound represented by Formula 4 below was added to the non-aqueous electrolyte instead of adding 3.0 wt% of the compound represented by Formula 1-A-1.

[Formula 4]

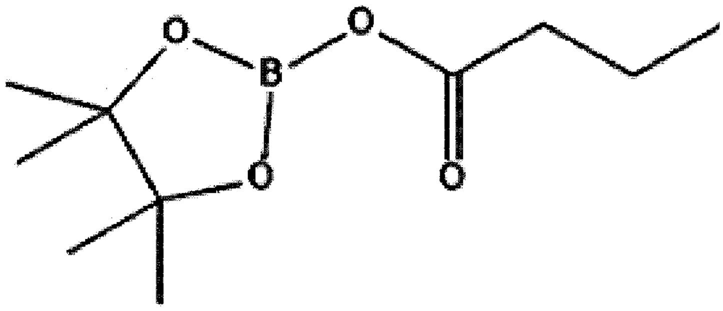

**Comparative Example** 4

A non-aqueous electrolyte and a lithium secondary battery were prepared in the same manner as in Example 1 except that 3.0 wt% of the compound represented by Formula 5 below was added to the non-aqueous electrolyte instead of adding 3.0 wt% of the compound represented by Formula 1-A-1.

[Formula 5]

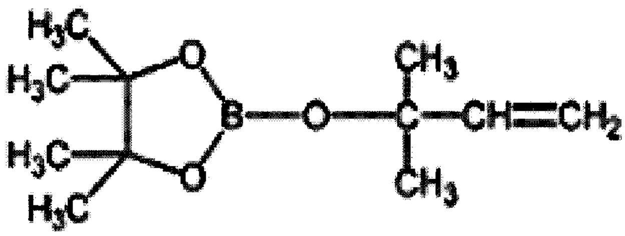

**Experimental Examples**

Experimental Example 1 Evaluation of high-temperature cycle performance

The lithium secondary batteries prepared in Examples 1 to 6 and Comparative Examples 1 to 4 were charged to 4.2V at a current of 0.05C at 45°C using an electrochemical charger/discharger under CC/CV and 1C conditions, and were

then discharged to 3.0V under CC, 0.5C conditions, which was set as one cycle. 200 cycles of charging/discharging were performed.

1-1: Evaluation of capacity retention rate

The capacity retention rate was calculated using the following equation, and the results are presented in Table below.

Capacity retention rate (%) = (discharge capacity after 200 cycles/discharge capacity after 1 cycle)x100

1-2: Evaluation of resistance increase rate

After one cycle of charging and discharging, the discharge capacity after one cycle was measured using an electrochemical charger/discharger, the SOC was adjusted to SOC 50%, and a pulse of 2.5C was then applied for 10 seconds. The initial resistance was calculated through a difference between the voltage before the pulse application and the voltage after the pulse application.

After 200 cycles of charging and discharging, the resistance after 200 cycles was calculated in the same manner as above. The resistance increase rate was calculated using the following equation, and the results are presented in Table 3 below.

Resistance increase rate (%) = { (resistance after 200 cycles - initial resistance)/initial resistance}x100

**Experimental Example 2 Evaluation of high-temperature storage performance**

The lithium secondary batteries prepared in Examples 1 to 6 and Comparative Examples 1 to 4 were charged to 4.2V at a current of 0.05C at 25°C under CC/CV, 0.33C conditions, and were then discharged to 2.5V at a current of 0.33C to perform initial charging/discharging. Afterwards, they were charged to 4.2V at a current of 0.05C under CC/CV, 0.33C conditions at 25°C, and were then stored at 60°C for 8 weeks.

2-1: Evaluation of capacity retention rate

After being stored for 8 weeks, the lithium secondary batteries were charged to 4.2V at a current of 0.05C at 25°C under a 0.33C condition, and were then discharged to 3.0V at a current of 0.33C. The capacity was then measured during the discharge.

The capacity retention rate was evaluated by using the following equation, and the results are presented in Table 1 below.

Capacity retention rate (%) = (discharge capacity after 8- week storage / initial discharge capacity) x 100

2-2: Evaluation of resistance increase rate

During initial charging and discharging, after the capacity was confirmed at room temperature, the lithium secondary batteries were charged to SOC 50 based on the discharge capacity and were discharged at a current of 3C for 10 seconds. The resistance was measured by a voltage drop difference to obtain an initial resistance, and was measured by the same method after storage at 60°C for 8 weeks to obtain a final resistance. The resistance increase rate was calculated using the following equation. The results are presented in Table 1 below.

Resistance increase rate (%) =(final resistance - initial resistance)/initial resistance)x100

[Table 1]

| | Experimental Example 1 | | Experimental Example 2 | |
|---|---|---|---|---|
| | Capacity retention rate (%) | Resistanc e increase rate (%) | Capacity retention rate (%) | Resistance increase rate (%) |
| Example 1. | 92 | 6 | 95 | 5 |
| Example 2. | 92 | 8 | 95 | 7 |

(continued)

| | Experimental Example 1 | | Experimental Example 2 | |
|---|---|---|---|---|
| | Capacity retention rate (%) | Resistanc e increase rate (%) | Capacity retention rate (%) | Resistance increase rate (%) |
| Example 3. | 90 | 6 | 94 | 8 |
| Example 4. | 93 | 7 | 96 | 6 |
| Example 5. | 92 | 8 | 96 | 8 |
| Example 6. | 91 | 7 | 95 | 7 |
| Comparative Example 1 | 76 | 34 | 72 | 38 |
| Comparative Example 2 | 77 | 33 | 75 | 35 |
| Comparative Example 3 | 77 | 33 | 74 | 36 |
| Comparative Example 4 | 69 | 42 | 70 | 40 |

Referring to Table 1 above, it can be confirmed that the lithium secondary batteries of Examples 1 to 6 which used the non-aqueous electrolyte according to the present disclosure exhibited remarkably superior high-temperature capacity retention rates and lower resistance increase rates during high-temperature cycle charging, discharging and high-temperature storage, when compared to Comparative Examples 1 to 3, which did not use the non-aqueous electrolyte.

## Claims

**1.** A non-aqueous electrolyte comprising: a lithium salt; an organic solvent; and an additive,

wherein the additive includes a compound represented by Formula 1:

[Formula 1]

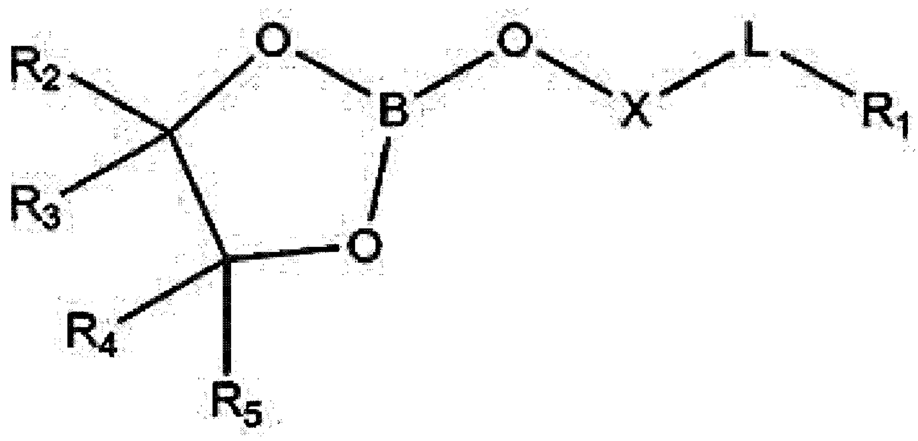

in Formula 1, $R_1$ is an allyl group or a propargyl group,
$R_2$, $R_3$, $R_4$ and $R_5$ are each independently selected from hydrogen and an alkyl group having 1 to 5 carbon atoms,
L is selected from a single bond and an alkylene group having 1 to 10 carbon atoms, and
X is selected from -C(=O)-, -S(=O)- and $-S(=O)_2-$.

**2.** The non-aqueous electrolyte of claim 1,
wherein $R_1$ is an allyl group.

**3.** The non-aqueous electrolyte of claim 1,
X is selected from -C(=O)- and -S(=O)-.

4. The non-aqueous electrolyte of claim 1, wherein $R_2$, $R_3$, $R_4$ and $R_5$ are each independently an alkyl group having 1 to 5 carbon atoms.

5. The non-aqueous electrolyte of claim 1, wherein the compound represented by Formula 1 includes at least one compound selected from the group consisting of compounds represented by Formula 1-A, Formula 1-B, Formula 1-C, Formula 2-A, Formula 2-B and Formula 2-C:

[Formula 1-A]

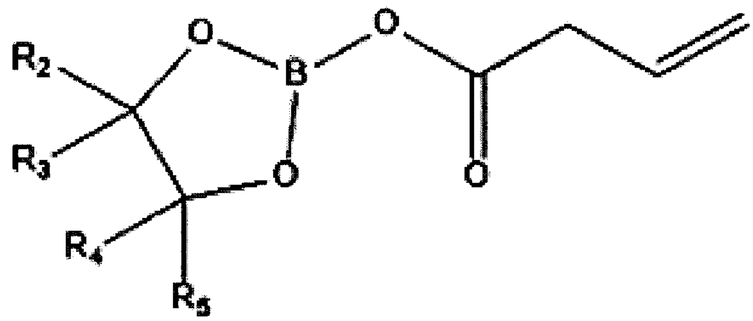

[Formula 1-B]

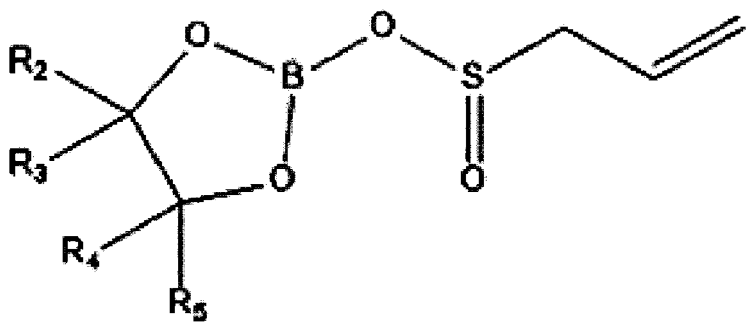

[Formula 1-C]

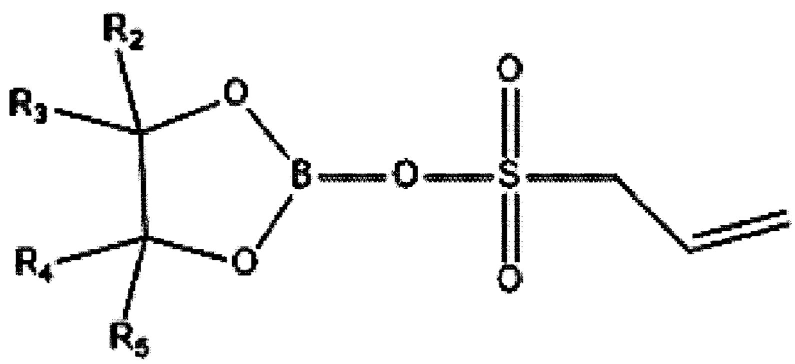

[Formula 2-A]

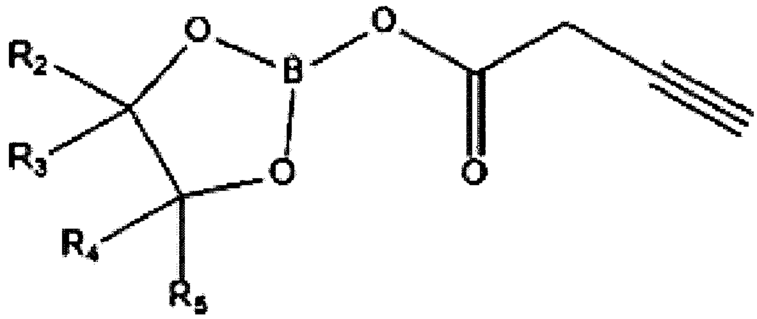

[Formula 2-B]

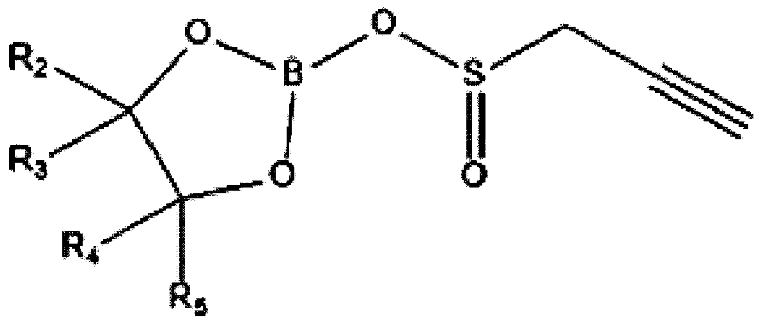

[Formula 2-C]

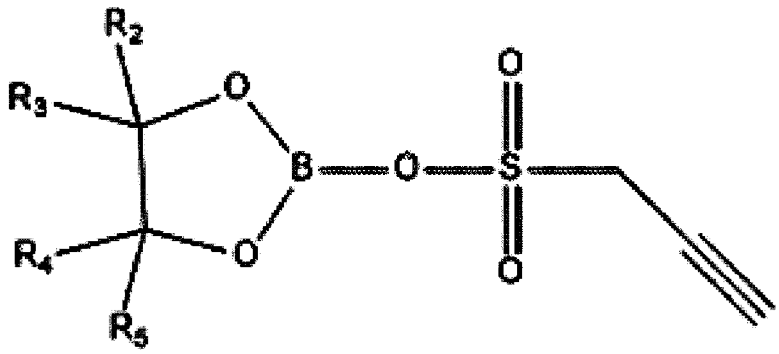

wherein, in Formula 1-A, Formula 1-B, Formula 1-C, Formula 2-A, Formula 2-B and Formula 2-C, $R_2$, $R_3$, $R_4$ and $R_5$ are as defined in Formula 1.

**6.** The non-aqueous electrolyte of claim 1, wherein the compound represented by Formula 1 includes at least one selected from the group consisting of compounds represented by Formula 1-A-1, Formula 1-A-2, Formula 1-B-1, Formula 1-B-2, Formula 1-C-1, Formula 1-C-2, Formula 2-A-1, Formula 2-A-2, Formula 2-B-1, Formula 2-B-2, Formula 2-C-1 and Formula 2-C-2 below:

[Formula 1-A-1]

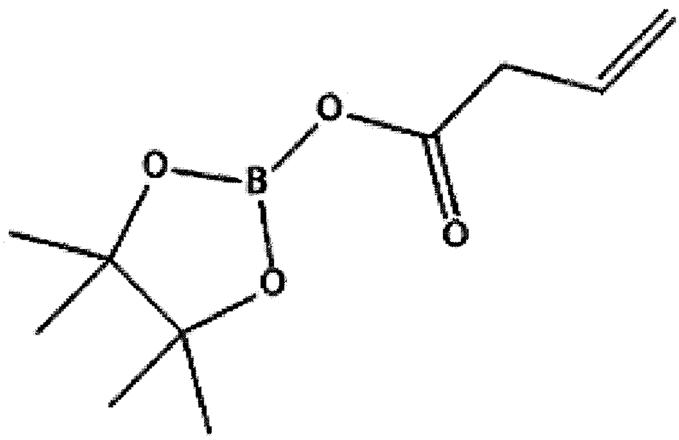

[Formula 1-A-2]

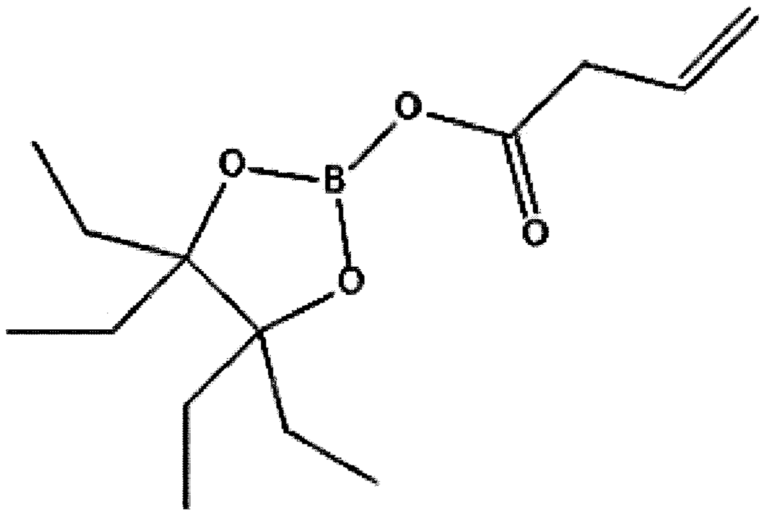

[Formula 1-B-1]

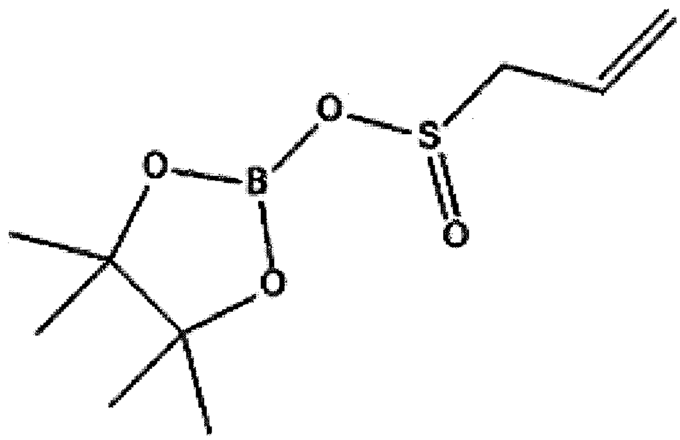

[Formula 1-B-2]

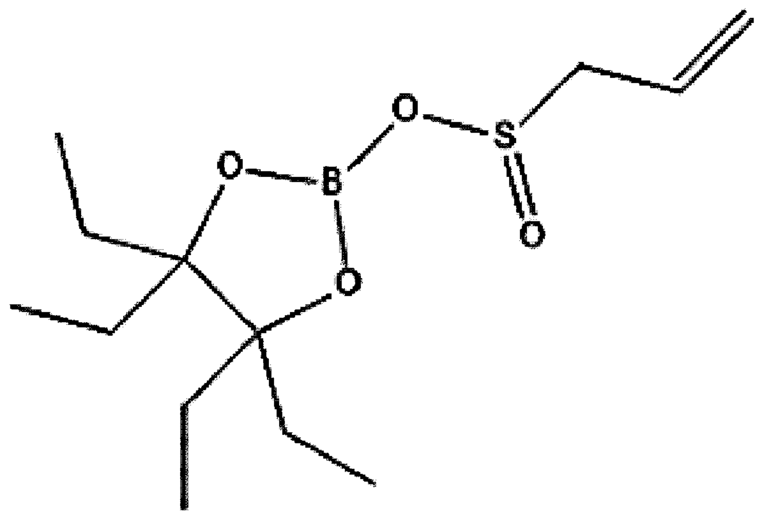

[Formula 1-C-1]

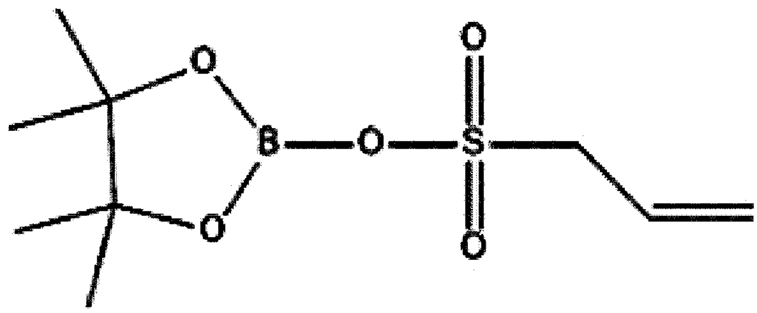

[Formula 1-C-2]

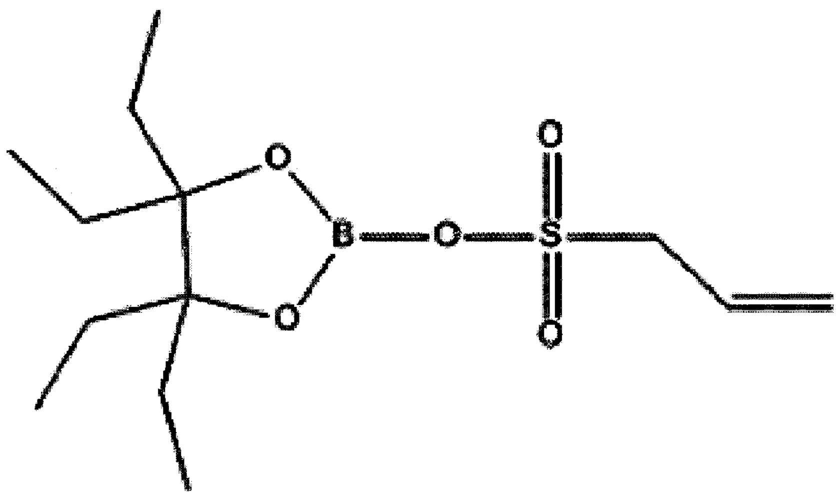

[Formula 2-A-1]

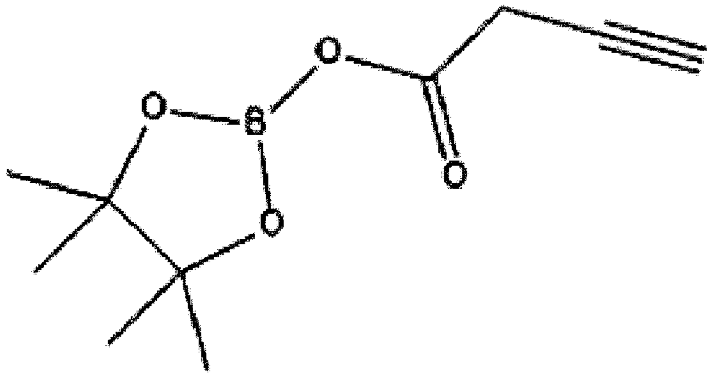

[Formula 2-A-2]

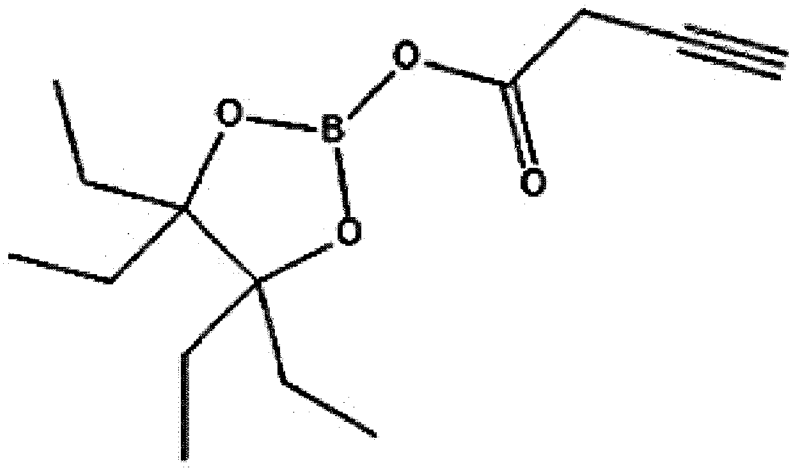

[Formula 2-B-1]

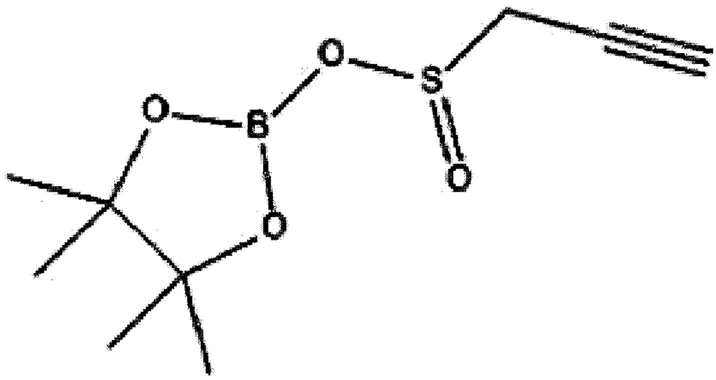

[Formula 2-B-2]

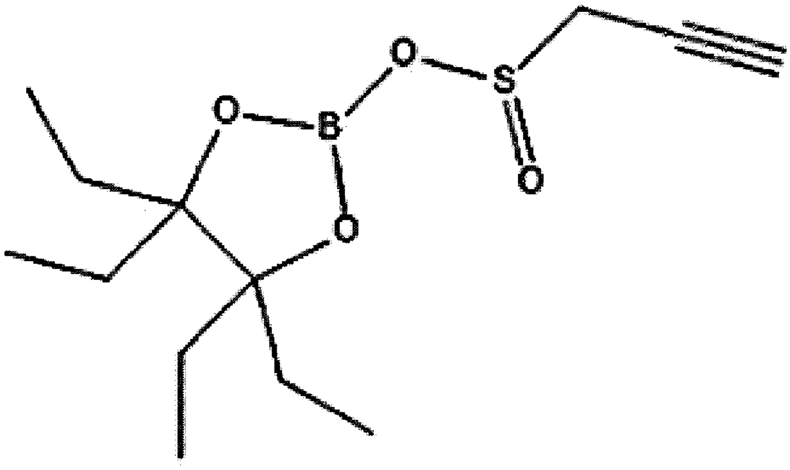

[Formula 2-C-1]

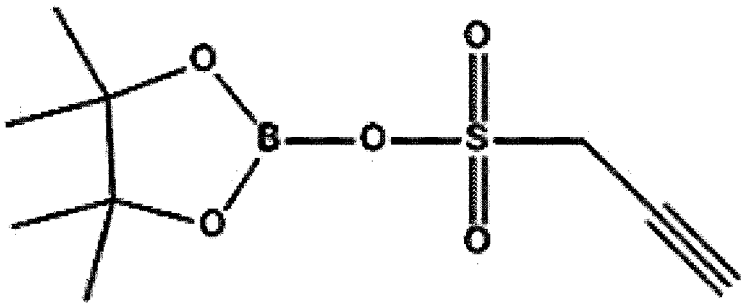

[Formula 2-C-2]

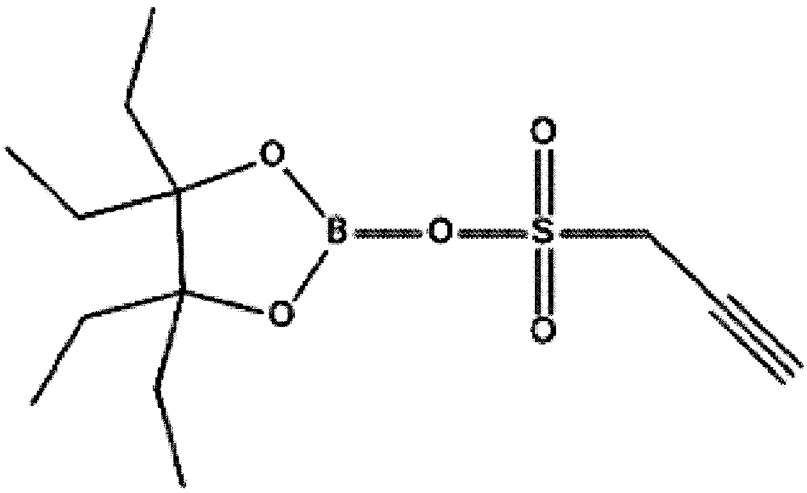

**7.** The non-aqueous electrolyte of claim 1, wherein the compound represented by Formula 1 is included in an amount of 0.01 wt% to 10 wt% based on the weight of the non-aqueous electrolyte.

**8.** The non-aqueous electrolyte of claim 1, wherein the lithium salt includes at least one selected from the group consisting of LiCl, LiBr, LiI, $LiBF_4$, $LiClO_4$, $LiAlO_4$

$LiAlCl_4$, $LiPF_6$, $LiSbF_6$, $LiAsF_6$, $LiB_{10}Cl_{10}$, LiBOB($LiB(C_2O_4)_2$), $LiCF_3SO_3$, LiFSI($LiN(SO_2F)_2$), $LiCH_3SO_3$, $LiCF_3CO_2$, $LiCH_3CO_2$ and LiBETI($LiN(SO_2CF_2CF_3)_2$).

**9.** The non-aqueous electrolyte of claim 1, wherein the lithium salt is included in the non-aqueous electrolyte at a mole concentration of 0.5 M to 5.0 M.

**10.** The non-aqueous electrolyte of claim 1, wherein the organic solvent includes at least one selected from a cyclic carbonate-based organic solvent, a linear carbonate-based organic solvent, a linear ester-based organic solvent and a cyclic ester-based organic solvent.

**11.** A lithium secondary battery comprising a positive electrode;

a negative electrode facing the positive electrode;
a separator interposed between the positive electrode and the negative electrode; and
and the non-aqueous electrolyte of claim 1.

## INTERNATIONAL SEARCH REPORT

International application No.
**PCT/KR2024/011990**

**A. CLASSIFICATION OF SUBJECT MATTER**

**H01M 10/0567**(2010.01)i; **H01M 10/0568**(2010.01)i; **H01M 10/0569**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0567(2010.01); H01G 11/06(2013.01); H01M 10/0568(2010.01); H01M 10/42(2006.01); H01M 4/133(2010.01); H01M 6/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 이차전지(lithium secondary battery), 전해질(electrolyte), 환형 보레이트(cyclic borate), 알릴기(allyl group), 프로파질기(propargyl group), 고온(high temperature)

**C. DOCUMENTS CONSIDERED TO BE RELEVANT**

| Category* | Citation of document, with indication, where appropriate, of the relevant passages | Relevant to claim No. |
|---|---|---|
| A | KR 10-2015-0128564 A (LG CHEM, LTD.) 18 November 2015 (2015-11-18) See claims 1, 5, 6-13 and 16. | 1-11 |
| A | KR 10-2535602 B1 (SUMITOMO SEIKA CHEMICALS CO., LTD.) 22 May 2023 (2023-05-22) See claims 1-10; and paragraph [0021]. | 1-11 |
| A | US 2022-0263102 A1 (LITRONIK BATTERIETECHNOLOGIE GMBH) 18 August 2022 (2022-08-18) See claims 1-10. | 1-11 |
| A | JP 6015653 B2 (HITACHI CHEMICAL CO., LTD.) 26 October 2016 (2016-10-26) See claims 1, 2, 7 and 8. | 1-11 |
| A | HRUSZKEWYCZ, D. P. et al. Palladium(I)-Bridging Allyl Dimers for the Catalytic Functionalization of CO2. Journal of the American Chemical Society. 2011, vol. 133, no. 10, pp. 3280-3283. See page 3283, compound (7). | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 November 2024** | **21 November 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2024/011990**

| Patent document cited in search report | Publication date (day/month/year) | Patent family member(s) | Publication date (day/month/year) |
|---|---|---|---|
| KR 10-2015-0128564 A | 18 November 2015 | KR 10-1720413 B1 | 27 March 2017 |
| KR 10-2535602 B1 | 22 May 2023 | CN 110383565 A | 25 October 2019 |
| | | CN 110383565 B | 23 August 2022 |
| | | EP 3595071 A1 | 15 January 2020 |
| | | JP 7059250 B2 | 25 April 2022 |
| | | KR 10-2019-0125345 A | 06 November 2019 |
| | | TW 201836203 A | 01 October 2018 |
| | | TW I774736 B | 21 August 2022 |
| | | US 11387490 B2 | 12 July 2022 |
| | | US 2019-0393552 A1 | 26 December 2019 |
| | | WO 2018-164124 A1 | 13 September 2018 |
| US 2022-0263102 A1 | 18 August 2022 | CN 114342141 A | 12 April 2022 |
| | | EP 3764434 A1 | 13 January 2021 |
| | | EP 3997748 A1 | 18 May 2022 |
| | | JP 2022-540337 A | 15 September 2022 |
| | | WO 2021-004862 A1 | 14 January 2021 |
| JP 6015653 B2 | 26 October 2016 | CN 103518284 A | 15 January 2014 |
| | | CN 103518284 B | 30 March 2016 |
| | | KR 10-2014-0038979 A | 31 March 2014 |
| | | US 2014-0079987 A1 | 20 March 2014 |
| | | US 8962754 B2 | 24 February 2015 |
| | | WO 2012-153734 A1 | 15 November 2012 |

Form PCT/ISA/210 (patent family annex) (July 2022)